(19) Europäisches Patentamt
European Patent Office
Office européen des brevets

(11) **EP 3 604 434 B1**

(12) **EUROPEAN PATENT SPECIFICATION**

(45) Date of publication and mention of the grant of the patent:
**17.04.2024 Bulletin 2024/16**

(21) Application number: **18776836.1**

(22) Date of filing: **29.03.2018**

(51) International Patent Classification (IPC):
***C08L 53/00*** *(2006.01)* ***C08F 232/00*** *(2006.01)*
***C08F 297/08*** *(2006.01)* ***C08F 210/02*** *(2006.01)*
***C08L 23/08*** *(2006.01)* ***A61J 1/10*** *(2006.01)*
***A61M 5/00*** *(2006.01)*

(52) Cooperative Patent Classification (CPC):
(C-Sets available)
**A61J 1/1468; C08F 110/02; C08F 210/02; C08F 297/08; C08L 23/0823; C08L 53/00** (Cont.)

(86) International application number:
**PCT/JP2018/013375**

(87) International publication number:
**WO 2018/181781 (04.10.2018 Gazette 2018/40)**

(54) **CYCLIC OLEFIN RESIN COMPOSITION FOR MOLDING, MOLDED BODY, AND RESIN**

CYCLISCHE OLEFINHARZZUSAMMENSETZUNG ZUM FORMEN, FORMKÖRPER UND HARZ

COMPOSITION DE RÉSINE D'OLÉFINE CYCLIQUE POUR MOULAGE, CORPS MOULÉ ET RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2017 JP 2017067093**

(43) Date of publication of application:
**05.02.2020 Bulletin 2020/06**

(73) Proprietor: **Mitsui Chemicals, Inc.**
**Tokyo 104-0028 (JP)**

(72) Inventors:
- **ESASHIKA, Katsuhiro**
  **Sodegaura-shi Chiba 299-0265 (JP)**
- **SAITO, Haruka**
  **Sodegaura-shi Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 560 090**
**EP-A1- 0 566 988**
**JP-A- H0 372 547**
**JP-A- H05 339 327**
**JP-A- 2004 359 704**
**JP-A- 2004 359 798**
**JP-A- 2013 514 547**

- **YOON , JONGSEUNG: "Optically Transparent and High Molecular Weight Polyolefin Block Copolymers toward Self-Assembled Photonic Band Gap Materials", Macromolecules, vol. 39, no. 5, 2 March 2006 (2006-03-02), pages 1913-1919, XP055558757,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 110/02, C08F 4/64048;**
**C08F 210/02, C08F 4/64048;**
**C08L 23/0823, C08L 23/0823;**
**C08L 53/00, C08L 23/0823;**
C08F 210/02, C08F 232/08, C08F 2500/03,
C08F 2500/17, C08F 2500/32

## Description

TECHNICAL FIELD

The present invention relates to a cyclic olefin-based resin composition for molding, a molded product, and a resin.

BACKGROUND ART

A cyclic olefin-based resin composition has low impact resistance as physical properties resulting from the rigid structure of the resin. Therefore, in order to use the composition for molding, various examinations are being performed to improve the impact resistance (Patent Documents 1, 2, and the like).

Compositions containing cyclic olefin-based block copolymers are disclosed in Patent Documents 3 and 4. Furthermore, Patent Document 5 discloses a block copolymer formed of two or more kinds of $\alpha$-olefin·cyclic olefin copolymer units with different cyclic olefin contents.

RELATED DOCUMENT

PATENT DOCUMENT

[Patent Document 1] Japanese Laid-open Patent Publication No. 5-320268
[Patent Document 2] Japanese Laid-open Patent Publication No. 2009-51922
[Patent Document 3] Japanese Laid-open Patent Publication No. 5-339327
[Patent Document 4] Japanese Laid-open Patent Publication No. 6-41361
[Patent Document 5] Japanese Laid-open Patent Publication No. 2004-359798

SUMMARY OF THE INVENTION

TECHNICAL PROBLEM

According to the examination of the inventors of the present invention, in order to use a cyclic olefin-based resin composition in the field that requires a particularly high level of transparency, heat resistance, moist-heat resistance, and impact resistance, for example, in the field of medical containers such as a vial, an ample, and a syringe, the composition needs to be further improved.

The block copolymer-containing compositions disclosed in Patent Documents 3 and 4 have insufficient transparency, and impact resistance and heat resistance of the compositions need to be improved.

Patent Document 5 reports a copolymer having a plurality of glass transition temperatures. However, it is hard to say that the glass transition temperature thereof on a high temperature side is high enough. Furthermore, it is considered that the heat resistance/moist-heat resistance of the copolymer is still insufficient in the field and the like described above that require higher heat resistance/moist-heat resistance. Improvement is considered to be needed.

The present invention has been made in consideration of the above circumstances. An object of the present invention is to accomplish a high level of transparency, impact resistance, heat resistance, and moist-heat resistance in a molded product obtained using a cyclic olefin-based resin composition.

SOLUTION TO PROBLEM

In order to achieve the aforementioned object, the inventors of the present invention conducted an intensive examination. As a result, the inventors have found that in a case where a molded product such as a container is prepared using a specific cyclic olefin-based resin composition, it is possible to improve heat resistance, moist-heat resistance, and impact resistance while maintaining transparency.

The present invention is constituted as defined in the claims.

ADVANTAGEOUS EFFECTS OF INVENTION

According to the present invention, in a case where a molded product is prepared using a cyclic olefin-based resin composition for molding, it is possible to improve heat resistance, moist-heat resistance, and impact resistance

while maintaining transparency.

BRIEF DESCRIPTION OF THE DRAWINGS

The aforementioned object, other objects, characteristics, and advantages are further clarified by preferred embodiments described below and the following drawings attached thereto.
Fig. 1 is a chart showing molecular weight distributions of two resins synthesized in Examples.

DESCRIPTION OF EMBODIMENTS

Hereinafter, embodiments of the cyclic olefin-based resin composition for molding, the molded product, and the resin of the present invention will be described.
Unless otherwise specified, the expression of "a to b" in the description of a range of numerical values represents "equal to or greater than a and equal to or smaller than b".
In the present specification, in a case where there is no description regarding whether a group (atomic group) is substituted or unsubstituted, the group includes both the group which does not have a substituent and group which has a substituent. For example, "alkyl group" includes not only an alkyl group which does not have a substituent (unsubstituted alkyl group) but also an alkyl group which has a substituent (substituted alkyl group).
The cyclic olefin-based resin composition for molding of the present embodiment (hereinafter, simply described as "resin composition", "composition", or the like as well) is a cyclic olefin-based resin composition for molding containing a resin (A) which has a structural unit (a1) derived from an α-olefin and a structural unit (a2) derived from a cyclic olefin, has a glass transition temperature in both a region equal to or lower than 50°C and a region equal to or higher than 125°C in a case where the resin is subjected to differential scanning calorimetry, has a dispersity within a range of 1.0 to 1.6 measured by gel permeation chromatography, and has a weight-average molecular weight within a range of 10.000 to 500.000 measured by gel permeation chromatography.
Hereinafter, the aforementioned resin will be simply described as "resin (A)" or the like as well.
It is unclear why a molded product having excellent transparency, heat resistance, moist-heat resistance, and impact resistance is obtained from the composition described above. However, the reason is assumed to be as below.
Owing to its rigid structure, a cyclic olefin has high heat resistance and high stiffness. However, sometimes the cyclic olefin is "brittle", that is, is easily broken by impact.
In order to improve "brittleness" (fragileness), a method of copolymerizing an α-olefin or the like with the cyclic olefin is considered so as to appropriately reduce the stiffness of the resin.
However, in a case where an α-olefin is simply randomly copolymerized with the cyclic olefin, the function of the cyclic olefin structure might be "weakened" or "canceled out" by the α-olefin, and consequently, desired hardness or the like may not be obtained.
Presumably, the fact that the resin (A) according to the present embodiment has "glass transition temperature in both a range equal to or lower than 50°C and a range equal to or higher than 125°C" may mean that the resin (A) includes two or more segments (partial structures) in which molecules express markedly different molecular mobility with respect to heat. That is, it is considered that the resin (A) has both the α-olefin-rich moiety and cyclic olefin-rich moiety in one polymer chain.
Presumably, according to the resin (A), the function of the cyclic olefin structure may not be weakened/canceled out by the α-olefin, and the properties resulting from both the cyclic olefin and the α-olefin may be expressed. It is considered that consequently, excellent impact resistance can be obtained.
Particularly, it is considered that because the glass transition temperature of the resin (A) on a high temperature side is in a range equal to or higher than 125°C, the heat resistance and the moist-heat resistance may be excellent. Furthermore, it is considered that because the glass transition temperature of the resin (A) is in a low temperature region equal to or lower than 50°C, the impact resistance may be excellent. Presumably, these properties may be preferred for the composition to be suited for high temperature pasteurization/sterilization, and preferred for the composition to be used in medical containers that require unbreakableness.
As another method for improving "brittleness" (fragileness), a method of using a cyclic olefin-based resin and an α-olefin-based resin in combination (blending) is considered.
However, in a case where different resins are blended, the transparency of the finally obtained molded product might be lowered. For example, in a case where there is a difference in refractive index between two resins used in combination, the transparency of the obtained molded product may be lowered. Furthermore, in a case where the affinity between the resins is poor, sometimes a molded product having uniform properties cannot be prepared.
In a case where the resin (A), which is considered to have both the α-olefin-rich moiety and cyclic olefin-rich moiety in one polymer chain, is used, the aforementioned problems hardly occur in principle. It is considered that, as a result, a molded product having high transparency can be obtained.

The glass transition temperature of the resin (A) is in two temperature regions, and the dispersity of the resin (A) is within a range of 1.0 to 1.6. It is possible to say that these properties imply that during the synthesis reaction of the resin (A), the amount of byproducts that the growing polymer species coordinated with catalyst molecules generates by chain transfer is relatively small. As a result, the molecular structure and the chain length of the resin (A) contained in the composition are relatively uniform, and accordingly, it is easy to prepare a molded product that is homogenous overall. These properties are preferred in view of transparency and the like.

<Resin (A)>

The resin (A) will be specifically described.

·Glass transition temperature

In a case where the resin (A) is subjected to differential scanning calorimetry, the resin has a glass transition temperature (Tg) in both the region equal to or lower than 50°C and the region equal to or higher than 125°C. It is more preferable that in a case where the resin (A) is subjected to differential scanning calorimetry, the resin has a glass transition temperature (Tg) in both the region equal to or lower than 30°C and the region equal to or higher than 125°C.
Provided that the temperature of the glass transition temperature on a low temperature side of the two glass transition temperatures is Tg1, and that the temperature of the glass transition temperatures on a high temperature side is Tg2, Tg1 is preferably within a range of -50°C to 50°C, and more preferably within a range of 0°C to 30°C. Furthermore, Tg2 is preferably within a range of 125°C to 180°C, and more preferably within a range of 125°C to 160°C.
In the present specification, the glass transition temperature can be defined, for example, as a midpoint glass transition temperature determined by JIS K 7121. That is, in a DSC curve obtained by Differential Scanning Calorimetry (DSC), the temperature of a point at which straight lines separated from straight lines extending from base lines by equal distance in the ordinate direction intersect with a curve of a portion where glass transition stepwise changes can be adopted as the glass transition temperature.
In view of impact strength, it is preferable that Tg1, which is a temperature of a glass transition temperature on a low temperature side, is within the above range. Furthermore, in view of heat resistance, it is preferable that Tg2, which is a temperature of a glass transition temperature on a high temperature side, is within the above range.
The method for adjusting the glass transition temperature to be within the above range will be specifically described in the section of a manufacturing method of the resin (A).
Just to be clear, Tg1 and Tg2 are determined by measuring the resin (A) alone.

·Molecular weight, dispersity (Mw/Mn), and the like

The weight-average molecular weight of the resin (A) is 10,000 to 500, 000, and preferably 20, 000 to 300,000. The dispersity (Mw/Mn) of the resin (A) is 1.0 to 1.6, and preferably 1.0 to 1.5. These can be measured by gel permeation chromatography (GPC) and expressed in terms of polystyrene.
In view of haze (transparency), it is preferable that the dispersity (Mw/Mn) is within the above range.
Just to be clear, the dispersity mentioned herein is determined by measuring the resin (A) alone.

·Structural unit (a1)

The resin (A) has a structural unit (a1) derived from an $\alpha$-olefin. Specifically, examples of the $\alpha$-olefin (monomer) include an $\alpha$-olefin having 2 to 20 carbon atoms. As the $\alpha$-olefin, ethylene or propylene is preferable, and ethylene is more preferable.
For obtaining the resin (A), a plurality of kinds of $\alpha$-olefins (monomers) may be used.

·Structural unit (a2)

The resin (A) has a structural unit (a2) derived from a cyclic olefin. The cyclic olefin (monomer) may have a monocyclic structure or a polycyclic structure. Examples thereof include a cyclopentene structure, a cyclohexene structure, a cyclopentadiene structure, a norbornene structure, a norbornadiene structure, a dihydrodicyclopentadiene structure, a tetracyclododecene structure, a tricyclodecene structure, a tricycloundecene structure, a pentacyclopentadecene structure, a pentacyclohexadecene structure, and the like.
It is preferable that the resin (A) has the structural unit (a1) and, as the structural unit (a2), a structural unit derived from a monomer represented by General Formula (1) or (2).

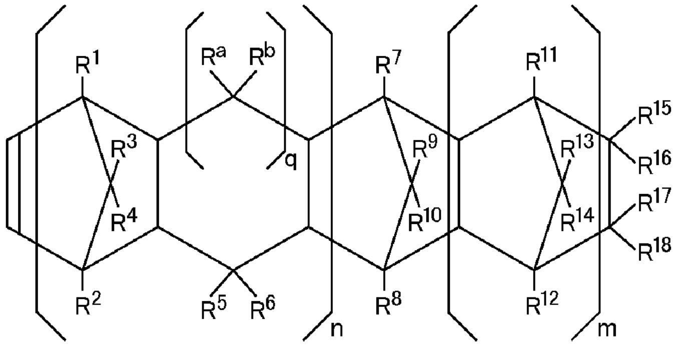

(1)

In General Formula (1),

n represents 0 or 1,
m represents 0 or a positive integer,
q represents 0 or 1,
$R^1$ to $R^{18}$, $R^a$, and $R^b$ each independently represent an atom or a group selected from the group consisting of a hydrogen atom, a halogen atom, and a hydrocarbon group.

$R^{15}$ to $R^{18}$ may form a monocyclic ring or a polycyclic ring by being bonded to each other, the monocyclic ring or the polycyclic ring may have a double bond. Furthermore, $R^{15}$ and $R^{16}$ or $R^{17}$ and $R^{18}$ may form an alkylidene group.

In a case where q represents 0, the respective bonds form a 5-membered ring by being bonded to each other.

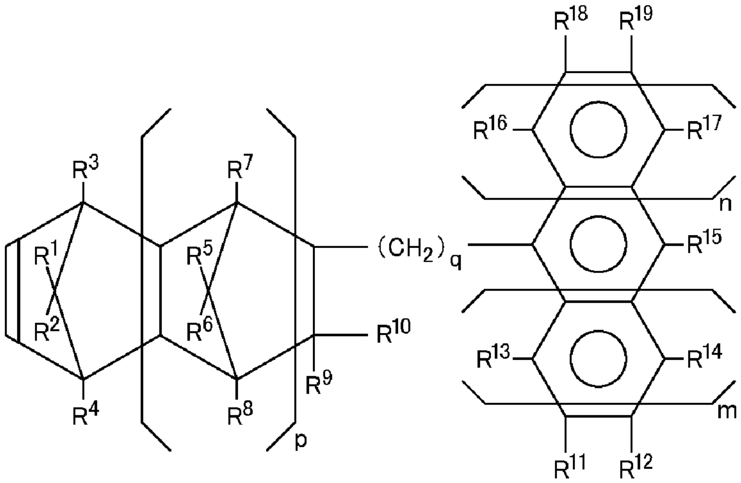

(2)

In General Formula (2),

p and q each independently represent 0 or an integer equal to or greater than 1,
m and n each independently represent 0, 1, or 2,
$R^1$ to $R^{19}$ each independently represent a hydrogen atom, a halogen atom, an aliphatic hydrocarbon group, an alicyclic hydrocarbon group, an aromatic hydrocarbon group, or an alkoxy group, a carbon atom, to which $R^9$ and $R^{10}$ are bonded, may be bonded to a carbon atom, to which $R^{13}$ is bonded, or to a carbon atom, to which $R^{11}$ is bonded, directly or through an alkylene group having 1 to 3 carbon atoms, and provided that n = m = 0, $R^{15}$ and $R^{12}$ or $R^{15}$ and $R^{19}$ may form a monocyclic or polycyclic aromatic ring by being bonded to each other.

Examples of the cyclic olefin represented by General Formula (1) or (2) include cyclic olefins resulting from a bicyclo[2.2.1]hept-2-ene derivative, tetracyclo [$4.4.0.1^{2,5}.1^{7,10}$]-3-dodecene derivative, a hexacyclo[$6.6.1.1^{3,6}.1^{10,13}.0^{2,7}.0^{9,14}$]-4-heptadecene derivative, an octacyclo [$8.8.0.1^{2,9}.1^{4,7}.1^{11,18}.1^{13,16}.0^{3,8}.0^{12,17}$]-5-docosene derivative, pentacyclo [$6.6.1.1^{3,6}.0^{2,7}.0^{9,14}$] -4-hexadecene derivative, a heptacyclo-5-eicosene derivative, a heptacyclo-5-heneicosene derivative, a tricyclo[$4.3.0.1^{2,5}$]-3-decene derivative, a tricyclo [$4.4.0.1^{2,5}$]-3-undecene derivative, a pentacyclo [$6.5.1.1^{3,6}.0^{2,7}.0^{9,13}$]-4-pentadecene derivative, a pentacyclopentadecadiene derivative, a pentacyclo

$[7.4.0.1^{2,5}.1^{9,12}.0^{8,13}]$-3-pentadecene derivative, a heptacyclo $[8.7.0.1^{3,6}.1^{10,17}.1^{12,15}.0^{2,7}.0^{11,16}]$-4-eicosene derivative, a nonacyclo $[10.9.1.1^{4,7}.1^{13,20}.1^{15,18}.0^{3,8}.0^{2,10}.0^{12,21}.0^{14,19}]$-5-pentacosen e derivative, a pentacyclo $[8.4.0.1^{2,5}.1^{9,12}.0^{8,13}]$-3-hexadecene derivative, a heptacyclo$[8.8.0.1^{4,7}.1^{11,18}.1^{13,16}.0^{3,8}.0^{12,17}]$-5-heneicosene derivative, a nonacyclo$[10.10.1.1^{5,8}.1^{14,21}.1^{16,19}.0^{2,11}.0^{4,9}.0^{13,22}.0^{15,20}]$-5-hexacosen e derivative, a 1,4-methano-1,4,4a,9a-tetrahydrofluorene derivative, a 1,4-methano-1,4,4a,5,10,10a-hexahydroanthracene derivative, a cyclopentadiene-acenaphthylene adduct, and the like. As the cyclic olefin, norbornene and tetracyclododecene (more specifically, tetracyclo $[4.4.0.1^{2,5}.1^{7,10}]$-3-dodecene) are particularly preferable.

For obtaining the resin (A), one kind of cyclic olefin or two or more kinds of cyclic olefins may be used.

·Other structural units

As long as the effects of the present invention are exhibited, the resin (A) may contain structural units other than the structural unit (a1) and the structural unit (a2). The proportion of those structural units in all the repeating units of the resin (A) is generally 0 to 20 mol% and preferably 0 to 10 mol%. The resin (A) may not contain structural units other than the structural unit (a1) and the structural unit (a2).

·Segment

As an embodiment of the resin (A), for example, an embodiment is preferable in which the resin (A) has a first segment and a second segment described below. There is a difference in the content ratio of the structural unit (a1) and the structural unit (a2) between the first segment and the second segment.

First segment: segment containing structural unit (a1) at 0 to 80 mol% and structural unit (a2) at 20 to 100 mol%
Second segment: segment containing structural unit (a1) at 40 to 100 mol% and structural unit (a2) at 0 to 60 mol%

The molar ratio of the structural unit (a1) in the second segment is higher than the molar ratio of the structural unit (a1) in the first segment. That is, in the second segment, the proportion of the structural unit derived from an $\alpha$-olefin is relatively high.

It is preferable that the molar ratio of the structural unit (a2) in the second segment is lower than the molar ratio of the structural unit (a2) in the first segment. That is, it is preferable that in the second segment, the proportion of the structural unit derived from a cyclic olefin is relatively low.

Presumably, in the resin (A) of the embodiment described above, the molecular mobility of the first segment may be observed as a glass transition temperature in a region equal to or higher than 125°C, and the molecular mobility of the second segment may be observed as a glass transition temperature equal to or lower than 50°C.

The content of the structural unit (a1) in the first segment is generally 0 to 80 mol%, preferably 30 to 80 mol%, and more preferably 50 to 75 mol%.

The content of the structural unit (a2) in the first segment is generally 20 to 100 mol%, preferably 20 to 70 mol%, and even more preferably 25 to 50 mol%.

The content of the structural unit (a1) in the second segment is generally 40 to 100 mol%, and preferably 70 to 95 mol%.

The content of the structural unit (a2) in the second segment is generally 0 to 60 mol%, and preferably 5 to 30 mol%.

The content (mol%) of the structural unit (a1) in the second segment is larger than the content (mol%) of the structural unit (a1) in the first segment, preferably by equal to or greater than 5 mol%, more preferably by equal to or greater than 10 mol%, and even more preferably by equal to or greater than 15 mol%.

In the resin (A), the content of the second segment with respect to the total amount of the resin (A) is preferably 1% to 80% by mass, and more preferably 10% to 60% by mass.

Furthermore, in the resin (A), the content of the first segment with respect to the total amount of the resin (A) is preferably 20% to 99% by mass, and more preferably 40% to 90% by mass.

In a case where the content of the first and second segments is within the above range, higher impact resistance and higher transparency can be simultaneously achieved.

The content (copolymerization ratio) of the structural unit (a1) and the structural unit (a2) in each segment can be determined, for example, by the amount of monomers used in the polymerization reaction, the amount of monomers further added, the amount of residual monomers, and the like.

In addition, the content of the structural units (a1) and (a2) can be determined by a method in which (1) first, a glass transition temperature of a random copolymer of the structural unit (a1) and the structural unit (a2) that are copolymerized at a known ratio (or copolymerized at a ratio capable of being accurately measured by known techniques) is measured so as to set up a relational expression between a content of each of the structural units and a glass transition

temperature, and (2) then the glass transition temperature measured using the resin (A) is put in the relational expression. According to the knowledge of the inventors of the present invention, the molecular motion of the first segment and the molecular motion of the second segment are highly independent, and by the aforementioned technique, the content (copolymerization ratio) of the structural unit (a1) and the structural unit (a2) in each of the segments can be ascertained with sufficient accuracy.

The content of the first segment and the content of the second segment in the resin (A) can be determined, for example, by the amount of monomers used in the polymerization reaction, the amount of monomers further added, the amount of residual monomers, and the like.

In addition, the content of the first and second segments can be determined by a method of setting up an equation from a copolymerization ratio (determined by $^{13}C$-NMR or the like) of the structural unit (a1) and/or the structural unit (a2) based on the total amount of the resin (A) and a copolymerization ratio of the structural unit (a1) and/or the structural unit (a2) in each of the segments.

"Length" of the first segment is not particularly limited as long as the resin (A) is considered to have a glass transition temperature resulting from the first segment. Typically, the length of the first segment is equal to or greater than the total length of 10 structural units derived from a monomer (preferably equal to or greater than the total length of 20 structural units and more preferably equal to or greater than the total length of 40 structural units), or equal to or greater than a molecular weight of 500 in a polymer chain (preferably equal to or greater than a molecular weight of 1,000, and more preferably equal to or greater than a molecular weight of 2,000). In a case where the resin (A) is synthesized such that the length of the first segment is within the above range, the resin (A) certainly have two glass transition temperature, and the effects of the present invention can be reliably obtained.

The aspect of "length" of the first segment is also applied to "length" of the second segment.

The resin (A) may have a segment which corresponds none of the first segment and the second segment.

In the resin (A), the boundary between the first segment and the second segment may be clearly recognized or difficult to recognize. For example, in an embodiment, the content ratio of the structural unit (a1) and the structural unit (a2) discontinuously or continuously changes in the polymer chain. That is, in a case where two separate sites in the polymer chain are seen, the polymer chain just needs to have a moiety corresponding to the first segment and a moiety corresponding to the second segment.

In brief, the resin (A) just needs to include moieties (partial structures) between which the content ratio of the structural unit (a1) and the structural unit (a2) varies, such that two glass transition temperature are observed in a region equal to or higher than 125°C and a region equal to or lower than 50°C respectively. It is considered that in a case where the resin (A) is as described above, preferred effects may be obtained based on the mechanism presumed as above.

As an embodiment, it is preferable that the structural unit (a1) and the structural unit (a2) are randomly arranged in each of the first segment and the second segment.

·Viscosity

An intrinsic viscosity [$\eta$] of the resin (A) measured in decalin at 135°C is generally 0.01 to 10 dl/g, and preferably 0.05 to 5 dl/g. In a case where the resin (A) has an appropriate intrinsic viscosity, the composition can be sufficiently molded even though the temperature of the resin is not increased too much.

·Manufacturing method of resin (A)

The manufacturing method of the resin (A) is not particularly limited. The resin (A) can be manufactured (synthesized) based on a known method such as addition polymerization or ring opening polymerization. Specifically, the resin (A) can be manufactured by addition polymerization. More specifically, it is preferable to manufacture the resin (A) by performing copolymerization in a hydrocarbon solvent by using, as a catalyst, a vanadium-based catalyst formed of a vanadium compound soluble in the hydrocarbon solvent and an organic aluminum compound, a titanium-based catalyst formed of a titanium compound and an organic aluminum compound, or a zirconium-based catalyst formed of a zirconium compound, which has, as a ligand, a polydentate compound formed of at least two conjugated cycloalkadienyl groups bonded to each other through a lower alkylene group, and aluminoxane.

As the catalyst, a transition metal compound represented by General Formula (I) is also preferable. In view of adjusting the glass transition temperature of the resin (A) to be within the above range, this compound is preferable.

In General Formula (I), the portions represented by N···M generally mean that they are coordinated. However, in the present embodiment, the portions may or may not be coordinated.

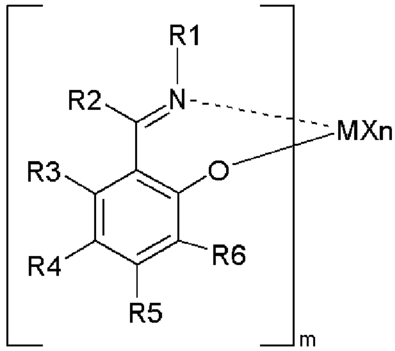

··· (I)

In General Formula (I),

M represents a transition metal atom of groups 4 and 5 in the periodic table,
m represents an integer of 1 to 4,
R1 represents an aryl group or a heterocyclic compound residue which may have one substituent or a plurality of substituents,
R2 to R5 may be the same as or different from each other and each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, two or more groups among these may form a ring by being linked to each other,
R6 represents a group selected from a phenyl group which may have one substituent or a plurality of substituents, a naphthyl group which may have one substituent or a plurality of substituents, a biphenyl group which may have one substituent or a plurality of substituents, a terphenyl group which may have one substituent or a plurality of substituents, and a phenanthryl group which may have one substituent or a plurality of substituents, two groups among the groups represented by R1 to R6 may be linked to each other in a case where m is equal to or greater than 2 (here, R1's are not bonded to each other),
n represents a number satisfying the valency of M,
X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group, a plurality of groups represented by X may be the same as or different from each other in a case where n is equal to or greater than 2, and a plurality of groups represented by X may form a ring by being bonded to each other.

R1 represents an aryl group or a heterocyclic compound residue which may have one substituent or a plurality of substituents.

Examples of the aryl group represented by R1 include a phenyl group, a naphthyl group, and the like.

Specifically, examples of the heterocyclic compound residue represented by R1 include pyrrole, pyridine, imidazole, pyrazole, triazole, oxazole, pyrazine, piridazine, pyrimidine, azepine, indolizine, indole, isoindole, indazole, quinoline, isoquinoline, naphthyridine, quinazoline, phthalazine, quinoxaline, quinoline, carbazole, phenanthridine, acridine, phenazine, phenanthroline, aziridine, acetidin, pyrrolidine, piperidine, pyrroline, imidazolidine, imidazoline, pyrazolidine, pyrazoline, piperazine, indoline, isoindoline, quinuclidine, purine, pteridin, furan, pyran, benzofuran, isobenzofuran, dioxolane, chromene, chromane, isochromane, xanthene, oxirane, oxetane, oxolane, oxadiazole, thiophene, benzothiophene, thietane, thiazole, isothiazole, thianaphthene, thianthrene, thiadiazole, trithiane, phenoxathiin, isoxazole, phenothiazine, phenoxazine, furazan, morpholine, and the like.

Examples of the substituent of R1 include a hydrocarbon group, an oxygen-containing group, a nitrogen-containing group, a halogen atom, and the like.

Specifically, examples of the hydrocarbon group include a methyl group, an ethyl group, a n-propyl group, an isopropyl group, a n-butyl group, an isobutyl group, a sec-butyl group, a t-butyl group, a neopentyl group, a n-hexyl group, and the like.

Specifically, examples of the oxygen-containing group include an alkoxy group, an aryloxy group, an ester group, an ether group, an acyl group, a carboxyl group, a carbonate group, a hydroxy group, a peroxy group, and the like.

Specifically, examples of the nitrogen-containing group include an amino group, an imino group, an amide group, an imide group, a hydrazino group, a hydrazono group, a nitro group, a nitroso group, a cyano group, an isocyano

group, a cyanic acid ester group, an amidino group, a diazo group, and the like.

Examples of the halogen atom include fluorine, chlorine, bromine, and iodine.

R2 to R5 may be the same as or different from each other and each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group. Two or more groups among these may form a ring by being linked to each other.

Examples of the halogen atom include fluorine, chlorine, bromine, and iodine.

Specifically, examples of the hydrocarbon group include a linear or branched alkyl group having 1 to 30 carbon atoms and preferably having 1 to 20 carbon atoms, such as a methyl group, an ethyl group, a n-propyl group, an isopropyl group, a n-butyl group, an isobutyl group, a sec-butyl group, a t-butyl group, a neopentyl group, or a n-hexyl group; a linear or branched alkenyl group having 2 to 30 carbon atoms and preferably having 2 to 20 carbon atoms, such as a vinyl group, an allyl group, or an isopropenyl group; a linear or branched alkynyl group having 2 to 30 carbon atoms and preferably having 2 to 20 carbon atoms, such as an ethynyl group or a propargyl group; a cyclic saturated hydrocarbon group having 3 to 30 carbon atoms and preferably having 3 to 20 carbon atoms, such as a cyclopropyl group, a cyclobutyl group, a cyclopentyl group, a cyclohexyl group, or an adamantyl group; a cyclic unsaturated hydrocarbon group having 5 to 30 carbon atoms, such as a cyclopentadienyl group, an indenyl group, or a fluorenyl group; an aryl group having 6 to 30 carbon atoms and preferably having 6 to 20 carbon atoms, such as a phenyl group, a naphthyl group, a biphenyl group, a terphenyl group, a phenanthryl group, or an anthracenyl group; an alkyl-substituted aryl group such as a tolyl group, an iso-propyl phenyl group, a t-butyl phenyl group, a dimethyl phenyl group, or a di-t-butyl phenyl group, and the like.

In the hydrocarbon group, a hydrogen atom may be substituted with halogen. Examples of such a hydrocarbon group include a halogenated hydrocarbon group having 1 to 30 carbon atoms and preferably having 1 to 20 carbon atoms, such as a trifluoromethyl group, a pentafluorophenyl group, or a chlorophenyl group.

The hydrocarbon group may be substituted with another hydrocarbon group. Examples of such a hydrocarbon group include an aryl group-substituted alkyl group such as a benzyl group or a cumyl group, and the like.

Furthermore, the hydrocarbon group may have a heterocyclic compound residue; an oxygen-containing group such as an alkoxy group, an aryloxy group, an ester group, an ether group, an acyl group, a carboxyl group, a carbonate group, a hydroxy group, a peroxy group, or a carboxylic acid anhydride group; a nitrogen-containing group such as an amino group, an imino group, an amide group, an imide group, a hydrazino group, a hydrazono group, a nitro group, a nitroso group, a cyano group, an isocyano group, a cyanic acid ester group, an amidino group, a diazo group, or an amino group which has become an ammonium salt; a boron-containing group such as a boranediyl group, a boranetriyl group, or a diboranyl group; a sulfur-containing group such as a mercapto group, a thioester group, a dithioester group, an alkylthio group, an arylthio group, a thioacyl group, a thioether group, a thiocyanic acid ester group, an isocyanic acid ester group, a sulfone ester group, a sulfonamide group, a thiocarboxyl group, a dithiocarboxyl group, a sulfo group, a sulfonyl group, a sulfinyl group, or a sulfenyl group; a phosphorus-containing group such as phosphide group, a phosphoryl group, a thiophosphoryl group, or a phosphate group, a silicon-containing group, a germanium-containing group, or a tin-containing group.

Among these, particularly, a linear or branched alkyl group having 1 to 30 carbon atoms and preferably having 1 to 20 carbon atoms, such as a methyl group, an ethyl group, a n-propyl group, an isopropyl group, a n-butyl group, an isobutyl group, a sec-butyl group, a t-butyl group, a neopentyl group, or a n-hexyl group; an aryl group having 6 to 30 carbon atoms and preferably having 6 to 20 carbon atoms, such as a phenyl group, a naphthyl group, a biphenyl group, a terphenyl group, a phenanthryl group, or an anthracenyl group; a substituted aryl group obtained by substituting the above aryl groups with 1 to 5 substituents such as a halogen atom, an alkyl group or an alkoxy group having 1 to 30 carbon atoms and preferably having 1 to 20 carbon atoms, or an aryl group or an aryloxy group having 6 to 30 carbon atoms and preferably having 6 to 20 carbon atoms, and the like are preferable.

Examples of the oxygen-containing group, the nitrogen-containing group, the boron-containing group, the sulfur-containing group, and the phosphorus-containing group include the same ones as those exemplified above.

Examples of the heterocyclic compound residue include residues of a nitrogen-containing compound such as pyrrole, pyridine, pyrimidine, quinoline, or traizine, an oxygen-containing compound such as furan or pyran, a sulfur-containing compound such as thiophene, and the like, groups obtained by further substituting these heterocyclic compound residues with a substituent such as an alkyl group or an alkoxy group having 1 to 30 carbon atoms and preferably having 1 to 20 carbon atoms, and the like.

Examples of the silicon-containing group include a silyl group, a siloxy group, a hydrocarbon-substituted silyl group, a hydrocarbon-substituted siloxy group, and the like. Specifically, examples thereof include a methyl silyl group, a dimethyl silyl group, a trimethyl silyl group, an ethyl silyl group, a diethyl silyl group, a triethyl silyl group, a diphenyl methyl silyl group, a triphenyl silyl group, a dimethyl phenyl silyl group, a dimethyl-t-butyl silyl group, a dimethyl(pentafluorophenyl)silyl group, and the like. Among these, a methyl silyl group, a dimethyl silyl group, a trimethyl silyl group, an ethyl silyl group, a diethyl silyl group, a triethyl silyl group, a dimethyl phenyl silyl group, a triphenyl silyl group, and

the like are preferable. Particularly, a trimethyl silyl group, a triethyl silyl group, a triphenyl silyl group, a dimethyl phenyl silyl group are preferable. Specifically, examples of the hydrocarbon-substituted siloxy group include a trimethylsiloxy group and the like.

Examples of the germanium-containing group and the tin-containing group include groups obtained by substituting silicon in the silicon-containing group with germanium and tin.

Next, examples of the aforementioned R2 to R5 will be more specifically described.

Specifically, examples of the alkoxy group include a methoxy group, an ethoxy group, a n-propoxy group, an isopropoxy group, a n-butoxy group, an isobutoxy group, a t-butoxy group, and the like.

Specifically, examples of the alkylthio group include a methylthio group, an ethylthio group, and the like.

Specifically, examples of the aryloxy group include a phenoxy group, a 2, 6-dimethyl phenoxy group, a 2, 4, 6-trimethyl phenoxy group, and the like.

Specifically, examples of the arylthio group include a phenylthio group, a methylphenylthio group, a naphthylthio group, and the like.

Specifically, examples of the acyl group include a formyl group, an acetyl group, a benzoyl group, a p-chlorobenzoyl group, a p-methoxybenzoyl group, and the like.

Specifically, examples of the ester group include an acetyloxy group, a benzyloxy group, a methoxycarbonyl group, a phenoxycarbonyl group, a p-chlorophenoxycarbonyl group, and the like.

Specifically, examples of the thioester group include an acetylthio group, a benzoylthio group, a methylthiocarbonyl group, a phenylthiocarbonyl group, and the like.

Specifically, examples of the amide group include an acetamide group, a N-methylacetamide group, a N-methylbezamide group, and the like.

Specifically, examples of the imide group include an acetimide group, a benzimide group, and the like. Specifically, examples of the amino group include a dimethylamino group, an ethylmethylamino group, a diphenylamino group, and the like.

Specifically, examples of the imino group include a methylimino group, an ethylimino group, a propylimino group, a butylimino group, a phenylimino group, and the like.

Specifically, examples of the sulfone ester group include a methyl sulfonate group, an ethyl sulfonate group, a phenyl sulfonate group, and the like.

Specifically, examples of the sulfonamide group include a phenyl sulfonamide group, a N-methylsulfonamide group, a N-methyl-p-toluene sulfonamide group, and the like.

Two or more groups, preferably, adjacent groups among R2 to R5 may form an alicyclic ring, an aromatic ring, or a hydrocarbon ring containing a different atom such as a nitrogen atom by being linked to each other. These rings may further have a substituent.

R6 represents a group selected from a phenyl group which may have one substituent or a plurality of substituents, a naphthyl group which may have one substituent or a plurality of substituents, a biphenyl group which may have one substituent or a plurality of substituents, a terphenyl group which may have one substituent or a plurality of substituents, and a phenanthryl group which may have one substituent or a plurality of substituents. R6 preferably represents a phenyl group which may have one substituent or a plurality of substituents. Examples of the substituent include a hydrocarbon group, an oxygen-containing group, a nitrogen-containing group, a halogen atom, and the like.

In a case where m is equal to or greater than 2, two groups among the groups represented by R1 to R6 may be linked to each other (here, R1's are not bonded to each other). Furthermore, in a case where m is equal to or greater than 2, R1's, R2's, R3's, R4's, R5's, and R6's may be the same as or different from each other respectively.

n is a number satisfying the valency of M. Specifically, n is an integer of 0 to 5, preferably an integer of 1 to 4, and more preferably an integer of 1 to 3.

X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group. In a case where n is equal to or greater than 2, X's may be the same as or different from each other.

Examples of the halogen atom include fluorine, chlorine, bromine, and iodine.

Examples of the hydrocarbon group are the same as the examples of the halogen atom represented by R2 to R5 described above. Specifically, example thereof include an alkyl group such as a methyl group, an ethyl group, a propyl group, a butyl group, a hexyl group, an octyl group, a nonyl group, a dodecyl group, or an eicosyl group; a cycloalkyl group having 3 to 30 carbon atoms, such as a cyclopentyl group, a cyclohexyl group, a norbornyl group, or an adamantyl group; an alkenyl group such as a vinyl group, a propenyl group, or a cyclohexenyl group; an aryl alkyl group such as a benzyl group, a phenyl ethyl group, or a phenyl propyl group; an aryl group such as a phenyl group, a tolyl group, a dimethyl phenyl group, a trimethyl phenyl group, an ethyl phenyl group, a propyl phenyl group, a biphenyl group, a naphthyl group, a methyl naphthyl group, an anthryl group, or a phenanthryl group, and the like, but the present invention

is not limited to these. These hydrocarbon groups also include halogenated hydrocarbon, specifically, a group formed in a case where at least one hydrogen in a hydrocarbon group having 1 to 20 carbon atoms is substituted with halogen.

Among these, a hydrocarbon group having 1 to 20 carbon atoms is preferable.

Examples of the heterocyclic compound residue are the same as the examples of the heterocyclic compound residue represented by R2 to R5 described above.

Examples of the oxygen-containing group are the same as the examples of the oxygen-containing group represented by R2 to R5 described above. Specifically, examples thereof include a hydroxy group, an alkoxy group such as a methoxy group, an ethoxy group, a propoxy group, or a butoxy group; an aryloxy group such as a phenoxy group, a methylphenoxy group, a dimethylphenoxy group, or a naphthoxy group; an arylalkoxy group such as a phenylmethoxy group or a phenylethoxy group; an acetoxy group; a carbonyl group, and the like, but the present invention is not limited to these.

Examples of the sulfur-containing group are the same as the examples of the sulfur-containing group represented by R2 to R5 described above. Specifically, examples thereof include a sulfonate group such as a methyl sulfonate group, a trifluoromethanesulfonate group, a phenyl sulfonate group, a benzyl sulfonate group, a p-toluene sulfonate group, a trimethylbenzene sulfonate group, a triisobutylbenzene sulfonate group, a p-chlorobenzene sulfonate group, or a pentafluorobenzene sulfonate group; a sulfinate group such as a methyl sulfinate group, a phenyl sulfinate group, a benzyl sulfinate group, a p-toluene sulfinate group, a trimethylbenzene sulfinate group, or a penafluorobenzene sulfinate group; an alkylthio group; an arylthio group, and the like, but the present invention is not limited to these.

Specifically, examples of the nitrogen-containing group are the same as the examples of the nitrogen-containing group represented by R2 to R5 described above. Specifically, examples thereof include an amino group; an alkylamino group such as a methylamino group, a dimethylamino group, a diethylamino group, a dipropylamino group, a dibutylamino group, or a dicyclohexylamino group; an arylamino group or an alkylarylamino group such as a phenylamino group, a diphenylamino group, a ditolylamino group, a dinaphthylamino group, or a methylphenylamino group, and the like, but the present invention is not limited to these.

Specifically, examples of the boron-containing group include $BR_4$ (R represents an alkyl group, an aryl which may have a substituent, a halogen atom, or the like).

Specifically, examples of the phosphorus-containing group include a trialkylphosphine group such as a trimethylphosphine group, a tributylphosphine group, or a tricyclohexylphosphine group; a triarylphosphine group such as a triphenylphosphine group or a tritolylphosphine group; a phosphite group (phosphide group) such as a methyl phosphite group, an ethyl phosphite group, or a phenyl phosphite group; a phosphonic acid group; a phosphinic acid group, and the like, but the present invention is not limited to these.

Specifically, examples of the silicon-containing group are the same as the examples of the silicon-containing group represented by R2 to R5 described above. Specifically, examples thereof include a hydrocarbon-substituted silyl group such as a phenylsilyl group, a diphenylsilyl group, a trimethylsilyl group, a triethylsilyl group, a tripropylsilyl group, a tricyclohexylsilyl group, a triphenylsilyl group, a methyldiphenylsilyl group, a tritolylsilyl group, or a trinaphthylsilyl group; a hydrocarbon-substituted silyl ether group such as a trimethylsilyl ether group; a silicon-substituted alkyl group such as a trimethylsilyl methyl group; a silicon-substituted aryl group such as a trimethylsilyl phenyl group, and the like.

Specifically, examples of the germanium-containing group are the same as the examples of the germanium-containing group represented by R2 to R5 described above. Specifically, examples thereof include a group formed in a case where silicon in the silicon-containing group is substituted with germanium.

Specifically, examples of the tin-containing group are the same as the examples of the tin-containing group represented by R2 to R5 described above. More specifically, examples thereof include a group formed in a case where silicon in the silicon-containing group is substituted with tin.

Specifically, examples of the halogen-containing group include a fluorine-containing group such as $PF_6$ or $BF_4$, a chlorine-containing group such as $ClO_4$ or $SbCl_6$, and an iodine-containing group such as $IO_4$, but the present invention is not limited to these.

Specifically, examples of the aluminum-containing group include $AlR_4$ (R represents hydrogen, an alkyl group, an aryl group which may have a substituent, a halogen atom, or the like), but the present invention is not limited thereto.

In a case where n is equal to or greater than 2, a plurality of groups represented by X may be the same as or different from each other, and may form a ring by being bonded to each other.

The resin (A) can also be obtained by performing ring opening polymerization of a cyclic olefin. Specifically, in the ring opening polymerization method, by polymerizing or copolymerizing a cyclic olefin in the presence of a ring opening polymerization catalyst, the resin (A) can be manufactured. As the ring opening polymerization catalyst, it is possible to use a catalyst, which is formed of a halide, a nitrate or an acetyl acetone compound of a metal and a reductant (the metail is selected from ruthenium, rhodium, palladium, osmium, iridium, platinum and so on) . Or, it is also ossible to use a catalyst which is formed of a halide or an acetyl acetone compound of a metal and an organic aluminum compound (the metail is selected from titanium, palladium, zirconium, molybdenum and so on).

In a case where the resin manufactured by ring opening polymerization is hydrogenated in the presence of a

known hydrogenation catalyst, the physical properties of the obtained resin can be further improved. The hydrogenation rate is preferably 50% to 100%, and more preferably 80% to 100%.

In order to obtain the resin (A) having glass transition temperature in both the region equal to or lower than 50°C and region equal to or higher than 125°C in a case where the resin is subjected to differential scanning calorimetry, it is possible to use a method of "further adding" an appropriate amount of raw material monomers (an $\alpha$-olefin and/or a cyclic olefin) in the process of the polymerization reaction. In a case where this method is used, the structural unit (a1) and the structural unit (a2) are not randomly distributed in the entirety of the resin (A), and two or more segments between which the ratio of the structural unit (a1) and structural unit (a2) varies can be provided in one chain of the resin (A). Consequently, it is possible to obtain the resin (A) having two or more specific glass transition temperature.

It is also possible to use a method of bonding two or more kinds of polymer precursors, between which the content ratio of the structural unit (a1) and the structural unit (a2) varies, by a polymer reaction. Furthermore, a method of using a living radical polymerization technique and the like can also be used.

The resin (A) may be graft-modified substance. The graft-modified substance is obtained by graft-modifying a portion of the resin (A), which is obtained by the coordination-Insertion polymerization or the ring opening polymerization described above, by using a modifier. Such a graft-modified substance can be manufactured by performing graft modification by means of mixing in a modifier so as to yield the desired modification rate, or can be manufactured by preparing a modified substance with a high modification rate in advance and then mixing the modified substance with an unmodified cyclic olefin-based resin. Examples of the modifier include an unsaturated carboxylic acid such as maleic acid anhydride, a derivative of the acid anhydride or an alkyl ester, and the like. In the present embodiment, it is desirable that a content rate of a structural unit derived from the modifier is equal to or lower than 10 mol% with respect to the total amount of the resin (A) .

Generally, the resin (A) is a resin manufactured by a single method. However, the resin (A) may be a mixture of resins manufactured by different methods.

<Cyclic olefin-based resin composition for molding>

The resin composition of the present embodiment may contain other materials as long as the resin composition contains the resin (A). For example, the resin composition may contain a thermoplastic resin different from the resin (A), a rubber component (rubber-based polymer or the like) for improving impact strength, a heat-resistant stabilizer, a weatherproof stabilizer, a light stabilizer, an antistatic agent, a slip agent, an antiblocking agent, an antifogging agent, a nucleating agent, a lubricant, a dye absorbing only the light having a specific wavelength, a pigment, natural oil, synthetic oil, wax, a light transmitting filler, and the like.

In a case where the resin composition contains components other than the resin (A), the amount of those other components in the total amount of the resin composition is preferably 0.01% to 50% by mass, and more preferably 0.01% to 10% by mass. The resin composition may not contain components other than the resin (A) (this does not mean that the impurity the resin (A) inevitably contains is excluded).

Particularly, the resin composition of the present embodiment may contain, in addition to the resin (A), a cyclic olefin resin (B) (hereinafter, simply referred to as resin (B) as well) which will be described later.

The resin (B) is a resin different from the resin (A), and a resin that meets the conditions of the resin (A) is handled as the resin (A).

In a case where the resin composition contains the resin (B), a preferred content ratio between the resin (A) and the resin (B) is as below. A content ratio of the resin (A) with respect to a total of 100 parts by mass of the resin (A) and the resin (B) is generally 5 to 95 parts by mass, and preferably 20 to 80 part by mass.

<Resin (B)>

The resin (B) is a resin which corresponds to any of [B-1], [B-2], [B-3], and [B-4] and has a softening point temperature (TMA) of 120°C to 200°C.

"Softening point temperature (TMA)" is a softening point measured using a thermomechanical analyzer. This value can be measured by molding only the resin (B) into a sheet having a thickness of about 2 mm.

[B-1] Random copolymer of ethylene and cyclic olefin represented by General Formula (1') or (2')

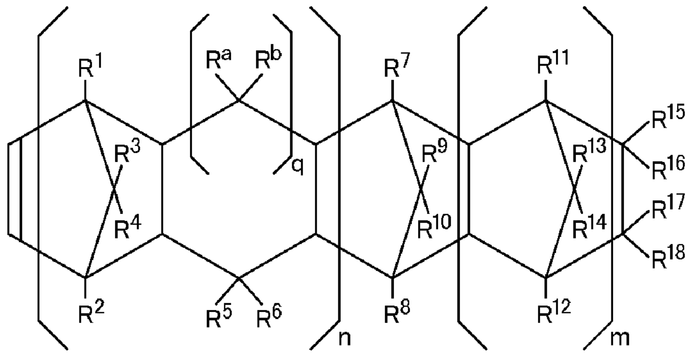

(1')

In General Formula (1'),

n represents 0 or 1,
m represents 0 or a positive integer,
q represents 0 or 1,
$R^1$ to $R^{18}$, $R^a$, and $R^b$ each independently represent a hydrogen atom, a halogen atom, or a hydrocarbon group which may be substituted with halogen, $R^{15}$ to $R^{18}$ may form a monocyclic ring or a polycyclic ring by being bonded to each other, the monocyclic ring or the polycyclic ring may have a double bond, and $R^{15}$ and $R^{16}$ or $R^{17}$ and $R^{18}$ may form an alkylidene group.

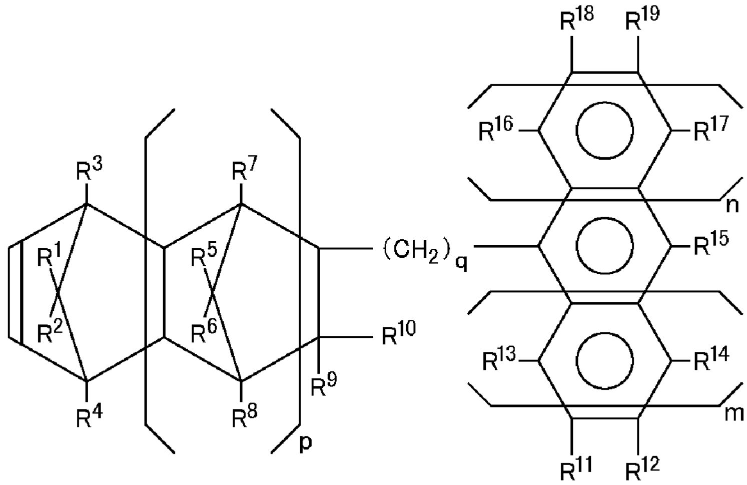

(2')

In General Formula (2'),

p and q each independently represent 0 or a positive integer,
m and n each independently represent 0, 1, or 2,
$R^1$ to $R^{19}$ each independently represent a hydrogen atom, a halogen atom, or a hydrocarbon group or alkoxy group which may be substituted with a halogen atom, a carbon atom, to which $R^9$ and $R^{10}$ are bonded, may be bonded to a carbon atom, to which $R^{13}$ is bonded, or to a carbon atom, to which $R^{11}$ is bonded, directly or through an alkylene group having 1 to 3 carbon atoms, and provided that n = m = 0, $R^{15}$ and $R^{12}$ or $R^{15}$ and $R^{19}$ may form a monocyclic or polycyclic aromatic ring by being bonded to each other.

[B-2] Ring-opened polymer or copolymer of cyclic olefin represented by General Formula (1') or (2')

[B-3] Hydride of ring-opened polymer or copolymer [B-2]

[B-4] Graft-modified substance of [B-1], [B-2], or [B-3]

In General Formula (1'), $R^1$ to $R^{18}$, $R^a$, and $R^b$ each independently represent a hydrogen atom, a halogen atom, or a hydrocarbon group. The halogen atom is a fluorine atom, a chlorine atom, a bromine atom, or an iodine atom.

Examples of the hydrocarbon group include an alkyl group having 1 to 20 carbon atoms, a cycloalkyl group having 3 to 15 carbon atoms, an aromatic hydrocarbon group, and the like. More specifically, examples of the alkyl group include a methyl group, an ethyl group, a propyl group, an isopropyl group, an amyl group, a hexyl group, an octyl group, a decyl group, a dodecyl group, an octadecyl group, and the like. Examples of the cycloalkyl group include a cyclohexyl group and the like. Examples of the aromatic hydrocarbon group include a phenyl group, a naphthyl group, and the like. These hydrocarbon groups may be substituted with a halogen atom.

In General Formula (1'), $R^{15}$ to $R^{18}$ may form a monocyclic ring or a polycyclic ring by being bonded to each other (in combination), and the monocyclic ring or the polycyclic ring formed in this way may have a double bond. Specific examples of the monocyclic ring or the polycyclic ring formed as above will be shown below.

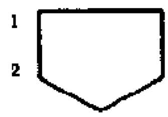
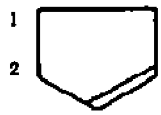
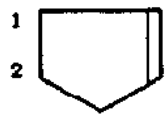
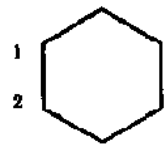
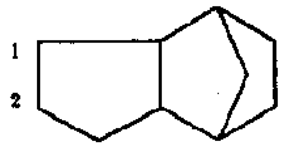

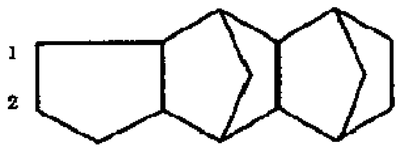
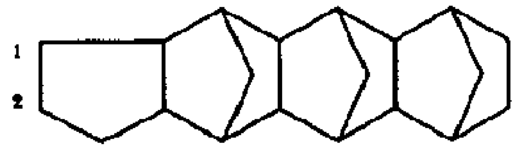

In the above examples, the carbon atom with number 1 or 2 is a carbon atom to which $R^{15}$ ($R^{16}$) or $R^{17}$ ($R^{18}$) in General Formula (1') is bonded. $R^{15}$ and $R^{16}$ or $R^{17}$ and $R^{18}$ may form an alkylidene group. The alkylidene group is, for example, an alkylidene group having 2 to 20 carbon atoms. Specifically, examples of the alkylidene group include an ethylidene group, a propylidene group, an isopropylidene group, and the like.

in General Formula (2'), p and q each independently represent 0 or a positive integer, and m and n each independently represent 0, 1, or 2. $R^1$ to $R^{19}$ each independently represent a hydrogen atom, a halogen atom, a hydrocarbon group, or an alkoxy group.

The halogen atom mentioned herein has the same definition as the halogen atom in General Formula (1'). Furthermore, examples of the hydrocarbon group include an alkyl group having 1 to 20 carbon atoms, a halogenated alkyl group having 1 to 20 carbon atoms, a cycloalkyl group having 3 to 15 carbon atoms, an aromatic hydrocarbon group, and the like. More specifically, examples of the alkyl group include a methyl group, an ethyl group, a propyl group, an isopropyl group, an amyl group, a hexyl group, an octyl group, a decyl group, a dodecyl group, an octadecyl group, and the like. Examples of the cycloalkyl group include a cyclohexyl group and the like. Examples of the aromatic hydrocarbon group include an aryl group, an aralkyl group, and the like. Specifically, examples thereof include a phenyl group, a tolyl group, a naphthyl group, a benzyl group, a phenyl ethyl group, and the like. Examples of the alkoxy group include a methoxy group, an ethoxy group, a propoxy group, and the like. The hydrocarbon group and the alkoxy group may be substituted with a fluorine atom, a chlorine atom, a bromine atom, or an iodine atom.

The carbon atom to which $R^9$ and $R^{10}$ are bonded may be bonded to the carbon atom, to which $R^{13}$ is bonded, or to the carbon atom to which $R^{11}$ is bonded, directly or through an alkylene group having 1 to 3 carbon atoms. That is, in a case where two carbon atoms described above are bonded to each other through an alkylene group, the groups represented by $R^9$ and $R^{13}$ and the groups represented by $R^{10}$ and $R^{11}$ form any alkylene group among a methylene group ($-CH_2-$), an ethylene group ($-CH_2CH_2-$), and a propylene group ($-CH_2CH_2CH_2-$) in combination. Furthermore, provided that n = m = 0, $R^{15}$ and $R^{12}$ or $R^{15}$ and $R^{19}$ may form a monocyclic or polycyclic aromatic ring by being bonded to each other. Examples of such a monocyclic or polycyclic aromatic ring include a group in which $R^{15}$ and $R^{12}$ further form an aromatic ring in a case where n = m = 0 as shown below.

In the following structural formula, q has the same definition as q in General Formula (2').

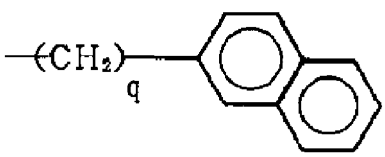
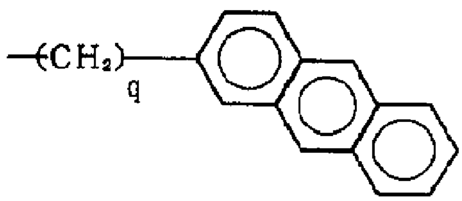

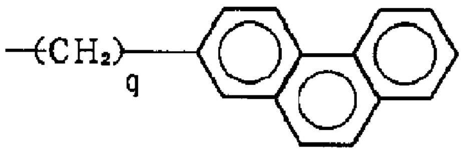

Examples of the cyclic olefin represented by General Formula (1') or (2') include bicyclo[2.2.1]-2-heptene (described as 2-norbornene as well) represented by the following structural formula, a derivative formed in a case where bicyclo[2.2.1]-2-heptene is substituted with a hydrocarbon group, and the like (in the following formula, each of the numbers 1 to 7 represents the position number of a carbon atom).

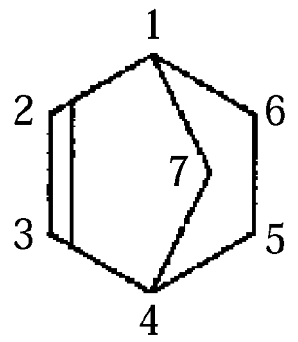

Examples of the aforementioned hydrocarbon group include 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl), 5,6-diphenyl, and the like.

Examples of the cyclic olefin represented by General Formula (1') or (2') include a bicyclo[2.2.1]-2-heptene derivative of a cyclopentadiene-acenaphthylene adduct, 1,4-methano-1,4,4a,9a-tetrahydrofluorene, 1,4-methano-1,4,4a,5,10,10a-hexahydroanthracene, and the like.

Examples of the cyclic olefin represented by General Formula (1') or (2') include a tricyclo [4.3.0.$1^{2,5}$]-3-decene derivative such as tricyclo [4.3.0.$1^{2,5}$]-3-decene, 2-methyltricyclo[4.3.0.$1^{2,5}$]-3-decene, or 5-methyltricyclo[4.3.0.$1^{2,5}$]-3-decene, a tricyclo[4.4.0.$1^{2,5}$]-3-unecene derivative such as tricyclo [4.4.0.$1^{2,5}$]-3-unecene or 10-methyltricyclo[4.4.0.$1^{2,5}$]-3-unecene, a tetracyclo [4.4.0.$1^{2,5}$.$1^{7,10}$]-3-dodecene (descried as tetracyclododecene as well) represented by the following formula, a derivative obtained in a case where tetracyclo[4.4.0.$1^{2,5}$.$1^{7,10}$]-3-dodecene is substituted with a hydrocarbon group, and the like (in the following formula, each of the numbers 1 to 12 represents the position number of a carbon atom) .

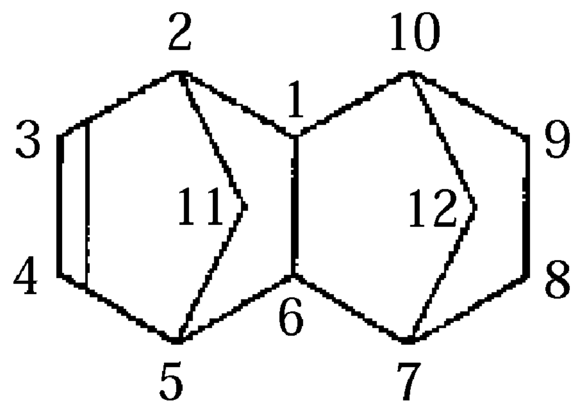

Examples of the aforementioned hydrocarbon group include 8-methyl, 8-ethyl, 8-propyl, 8-butyl, 8-isobutyl, 8-hexyl, 8-cyclohexyl, 8-stearyl, 5,10-dimethyl 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isoprolylidene-9-ethyl, 8-isoprolylidene-9-isopropyl, 8-isoprolylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl), 5,6-diphenyl, and the like.

Examples of the cyclic olefin represented by General Formula (1' ) or (2') include a pentacyclopentadiene compound such as an adduct of (cyclopentadiene-acenaphthylene adduct) and a cyclopentadiene, pentacyclo [6.5.1.1$^{3,6}$.0$^{2,7}$.0$^{9,13}$]-4-pentadecene and aderivative thereof, a pentacyclo [7.4.0.1$^{2,5}$.1$^{9,12}$.0$^{8,13}$]-3-pentadecene and a derivative thereof or a

pentacyclo [6.5.1.1$^{3,6}$.0$^{2,7}$.0$^{9,13}$]-4,10-pentadecadiene, a pentacyclo[8.4.0.1$^{2,5}$.1$^{9,12}$.0$^{8,13}$]-3-hexadecene and a derivative thereof, pentacyclo[6.6.1.1$^{3,6}$.0$^{2,7}$.0$^{9,14}$]-4-hexadecene and a derivative thereof,
hexacyclo[6.6.1.1$^{3,6}$.1$^{10,13}$.0$^{2,7}$.0$^{9,14}$]-4-heptadecene and a derivative thereof, heptacyclo [8.7.0.1$^{2,9}$.1$^{4,7}$.1$^{11,17}$.0$^{3,8}$.0$^{12,16}$]-5-heneicosene and a derivative thereof,
heptacyclo [8.8.0.1$^{2,9}$.1$^{4,7}$.1$^{11,18}$.0$^{3,8}$.0$^{12,17}$]-5-heneicosene and a derivative thereof,
octacyclo[8.8.0.1$^{2,9}$.1$^{4,7}$.1$^{11,19}$.1$^{13,16}$.0$^{3,8}$.0$^{12,17}$]-5-docosene and a derivative thereof,
nonacyclo[10.9.1.1$^{4,7}$.1$^{13,20}$.1$^{15,18}$.0$^{2,10}$.0$^{3,8}$.0$^{12,21}$.0$^{14,19}$]-5-pentacosen e and a derivative thereof,
nonacyclo[10.10.1.1$^{5,8}$.1$^{14,21}$.1$^{16,19}$.0$^{2,11}$.0$^{4,9}$.0$^{13,22}$.0$^{15,20}$]-6-hexacosen e and a derivative thereof, and the like.

Specific examples of the cyclic olefin represented by General Formula (1') or (2') will be shown below. More specific examples of the structures of the compounds include examples of structures of the cyclic olefin described in paragraphs "0032" to "0054" in Japanese Laid-open Patent Publication No. 7-145213.

The resin (B) may contain two or more kinds of units derived from the above cyclic olefin.

The resin (B) can be manufactured using the cyclic olefin represented by General Formula (1') or (2') and the like and appropriately selecting conditions. For selecting conditions, for example, the description in patent documents such as Japanese Laid-open Patent Publication No. 60-168708, Japanese Laid-open Patent Publication No. 61-120816, Japanese Laid-open Patent Publication No. 61-115912, Japanese Laid-open Patent Publication No. 61-115916, Japanese Laid-open Patent Publication No. 61-271308, Japanese Laid-open Patent Publication No. 61-272216, Japanese Laid-open Patent Publication No. 62-252406, Japanese Laid-open Patent Publication No. 62-252407, and International Patent Publication No. 2008/068897.

([B-1] Random copolymer of ethylene and cyclic olefin)

In [B-1] random copolymer of ethylene and the cyclic olefin represented by General Formula (1') or (2') (hereinafter, referred to as ethylene-cyclic olefin random copolymer [B-1] as well), provided that the total amount of structural units constituting the copolymer is 100 mol%, the content of the unit derived from ethylene is, for example, 5 to 95 mol% and preferably 20 to 80 mol%, and the content of the unit derived from the cyclic olefin is, for example, 5 to 95 mol% and preferably 20 to 80 mol%.

The ethylene composition and the cyclic olefin composition can be measured by $^{13}$C-NMR.

It is preferable that in the ethylene-cyclic olefin random copolymer [B-1], the unit derived from the ethylene and the unit derived from the cyclic olefin are bonded to each other by being randomly arranged and substantially have a linear structure. In a case where the copolymer is dissolved in an organic solvent and the obtained solution does not contain an insoluble fraction, it is possible to conclude that the copolymer is substantially linear and substantially does not have a gel-like crosslinked structure. For example, in a case where the copolymer is thoroughly dissolved in decalin at 135°C at the time of measuring the intrinsic viscosity [$\eta$], it is possible to make the same conclusion as described above.

Presumably, in the ethylene-cyclic olefin random copolymer [B-1], at least a portion of the cyclic olefin represented by General Formula (1') or (2') may be constituted with a repeating unit represented by General Formula [III] or [IV]. n, m, q, $R^1$ to $R^{18}$, $R^a$, and $R^b$ in General Formula [III] have the same definition as n, m, q, $R^1$ to $R^{18}$, $R^a$, and $R^b$ in General Formula (1') . Furthermore, n, m, q, $R^1$ to $R^{18}$, $R^a$, and $R^b$ in General Formula [IV] have the same definition as n, m, q, $R^1$ to $R^{18}$, $R^a$, and $R^b$ in General Formula (2').

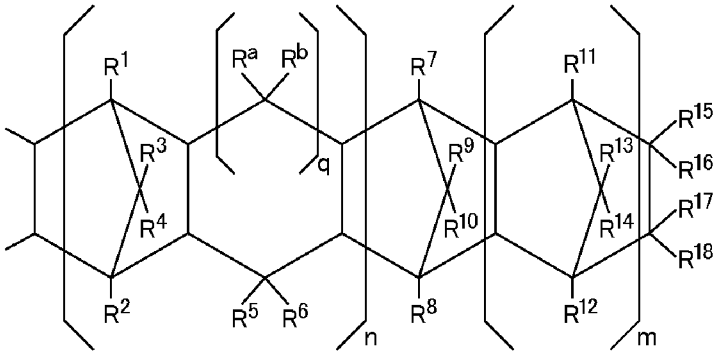

[III]

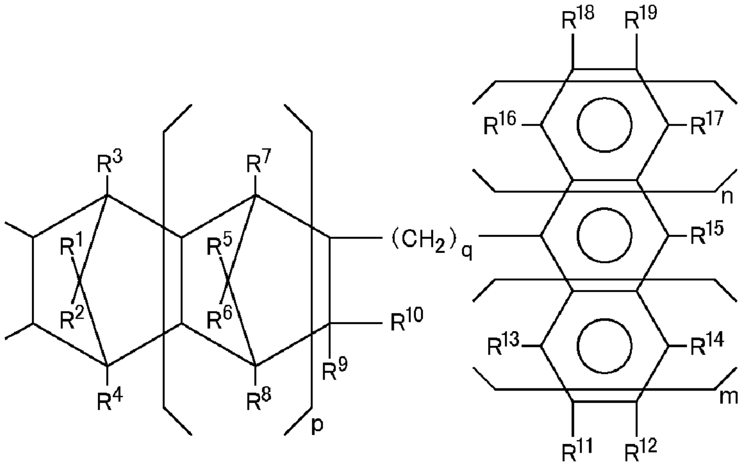

[IV]

If necessary, as long as the object of the present invention is not impaired, the ethylene-cyclic olefin random copolymer [B-1] may have a unit derived from another copolymerizable monomer. Specifically, [B-1] may contain a unit derived from another monomer generally in an amount equal to or smaller than 20 mol% and preferably in an amount equal to or smaller than 10 mol%.

Examples of another monomer described above include an olefin other than the ethylene and the cyclic olefin described above. Specifically, examples thereof include an $\alpha$-olefin having 3 to 20 carbon atoms such as propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, or 1-eicosene, a cycloolefin such as cyclobutene, cyclopentene, cyclohexene, 3,4-dimethylcyclopentene, 3-methylcyclohexene, 2-(2-methylbutyl)-1-cyclohexene, cyclooctene, or 3a,5,6,7a-tetrahydro-4,7-methano-1H-indene, and non-conjugated dienes such as 1,4-hexadiene, 4-methyl-1,4-hexadiene, 5-methyl-1,4-hexadiene, 1,7-octadiene, dicyclopentadiene, and 5-vinyl-2-norbornene.

The ethylene-cyclic olefin random copolymer [B-1] may contain two or more kinds of units derived from another monomer described above.

The ethylene-cyclic olefin random copolymer [B-1] can be manufactured by the manufacturing methods disclosed in the aforementioned patent documents by using ethylene and the cyclic olefin represented by General Formula (1') or (2'). For manufacturing the ethylene-cyclic olefin random copolymer [B-1], among the methods, a method is preferable in which a copolymerization reaction is performed in a hydrocarbon solvent by using a catalyst formed of a vanadium compound soluble in the hydrocarbon solvent and an organic aluminum compound.

The ethylene-cyclic olefin random copolymer [B-1] can also be manufactured using a solid-like group IVA metallocene-based catalyst. The solid-like group IVA metallocene-based catalyst is formed of a transition metal compound (metallocene compound), which contains a ligand having at least one cyclopentadienyl framework, an organic aluminum oxy compound, and an organic aluminum compound which is used if necessary. The group IVA transition metal is zirconium, titanium, or hafnium. Examples of the ligand having a cyclopentadienyl framework include a cyclopentadienyl group, an indenyl group, a tetrahydroindenyl group, a fluorenyl group, and the like that may be substituted with an alkyl group. These groups may be bonded through another group such as an alkylene group. Examples of ligands other than the ligand having a cyclopentadienyl framework include an alkyl group, a cycloalkyl group, an aryl group, an aralkyl group, and the like.

As the organic aluminum oxy compound and the organic aluminum compound, for example, the compounds

used for manufacturing an olefin-based polymer can be used. Such solid-like group IVA metallocene-based catalysts are specifically described, for example, in Japanese Laid-open Patent Publication No. 61-221206, Japanese Laid-open Patent Publication No. 64-000106, Japanese Laid-open Patent Publication No. 2-173112, and the like.

The ethylene-cyclic olefin random copolymer [B-1] can also be manufactured using a phenoxy imine-based catalyst (FI catalyst) or a pyrrole imine-based catalyst (PI catalyst). As described in Japanese Laid-open Patent Publication No. 2001-072706, Japanese Laid-open Patent Publication No. 2002-332312, Japanese Laid-open Patent Publication No. 2003-313247, Japanese Laid-open Patent Publication No. 2004-107486, and Japanese Laid-open Patent Publication No. 2004-107563, these catalysts are formed of (a) transition metal compound using phenoxy imine or pyrrole imine as a ligand and (b) at least one kind of compound selected from (b-1) organic metal compound, (b-2) organic aluminum oxy compound, and (b-3) compound forming an ion pair by reacting with the transition metal compound (a). As the transition metal contained in the transition metal compound, transition metals of groups 3 to 11 in the periodic table can be used.

([B-2] Ring-opened polymer or copolymer of cyclic olefin)

In [B-2] ring-opened polymer or copolymer of the cyclic olefin represented by General Formula (1') or (2') (hereinafter, described as ring-opened (co)polymer [B-2] of the cyclic olefin as well), at least a portion of the unit derived from the cyclic olefin represented by General Formula (1') or (2') is represented by Formula [V] or [VI].

n, m, q, $R^1$ to $R^{18}$, $R^a$, and $R^b$ in Formula [V] have the same definition as n, m, q, $R^1$ to $R^{18}$, $R^a$, and $R^b$ in General Formula (1').

n, m, p, q, and $R^1$ to $R^{19}$ in General Formula [VI] have the same definition as n, m, p, q, and $R^1$ to $R^{19}$ in General Formula (2').

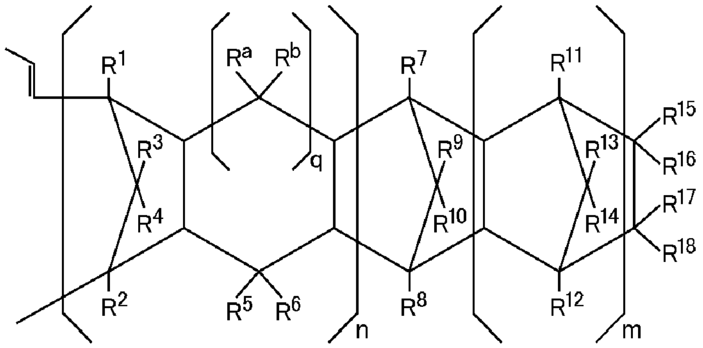

[V]

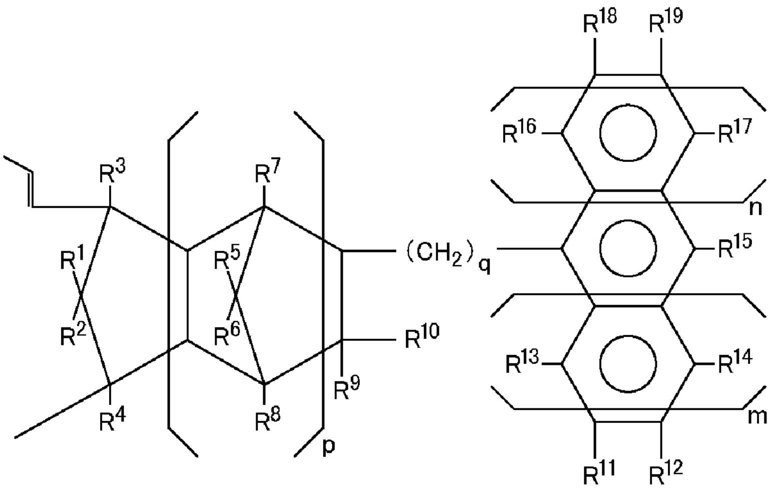

[VI]

The ring-opened (co)polymer [B-2] of the cyclic olefin can be manufactured by the manufacturing methods disclosed in the aforementioned patent documents. For example, [B-2] can be manufactured by polymerizing or copolymerizing the cyclic olefin represented by General Formula (1') in the presence of a ring opening polymerization catalyst.

As the ring opening polymerization catalyst, it is possible to use a catalyst, which is formed of a halide of a

metal selected from ruthenium, rhodium, palladium, osmium, indium, and platinum, a nitrate or an acetyl acetone compound, and a reductant, or a catalyst which is formed of a halide of a metal selected from titanium, palladium, zirconium, and molybdenum or an acetyl acetone compound and an organic aluminum compound.

The ring-opened (co)polymer [B-2] of the cyclic olefin can also be obtained by the method described in Japanese Laid-open Patent Publication No. 7-324108.

([B-3] Hydride of ring-opened (co)polymer [B-2] of cyclic olefin)

The hydride of the ring-opened (co)polymer [B-2] of the cyclic olefin (hereinafter, referred to as hydride [B-3] of the ring-opened (co)polymer as well) can be obtained hydrogenating the ring-opened (co) polymer [B-2] of the cyclic olefin by a method known in the related art such as a method of performing hydrogenation in the presence of a hydrogenation catalyst described in Japanese Laid-open Patent Publication No. 7-324108.

Presumably, in the hydride [B-3] of the ring-opened (co)polymer, at least a portion of the structural unit derived from General Formula (1') or (2') may be represented by General Formula [VII] or [VIII].

n, m, q, $R^1$ to $R^{18}$, $R^a$, and $R^b$ in General Formula [VII] have the same definition as n, m, q, $R^1$ to $R^{18}$, $R^a$, and $R^b$ in General Formula (1').

n, m, p, q, and $R^1$ to $R^{19}$ in General Formula [VIII] have the same definition as n, m, p, q, and $R^1$ to $R^{19}$ in General Formula (2').

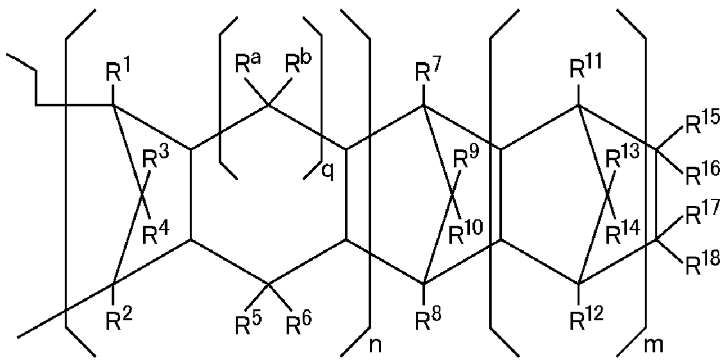

[VII]

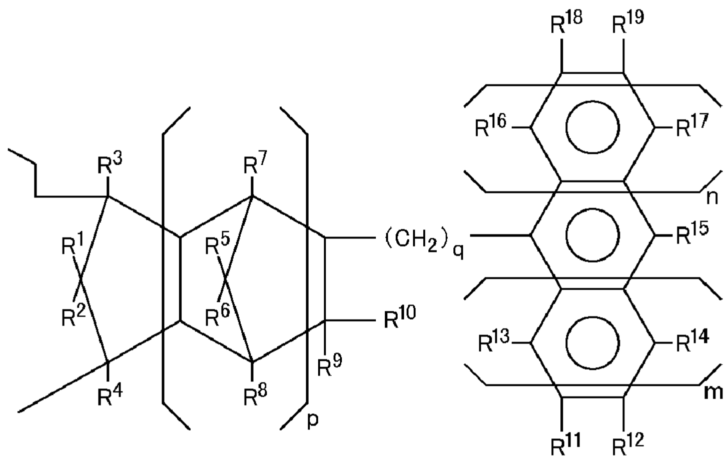

[VIII]

As the hydride [B-3] of the ring-opened (co)polymer, for example, Zeonex 1040R, ZF14, ZF16, and the like manufactured by ZEON CORPORATION can be used.

([B-4] Graft-modified substance)

[B-4] graft-modified substance of [B-1], [B-2], or [B-3] described above (referred to as graft-modified substance [B-4] as well) is a graft-modified substance of the ethylene-cyclic olefin random copolymer [B-1], the ring-opened (co)polymer [B-2] of the cyclic olefin, or the hydride [B-3] of the ring-opened (co)polymer.

As a modifier for obtaining the graft-modified substance [B-4], for example, unsaturated carboxylic acids are

used. Specifically, examples thereof include an unsaturated carboxylic acid such as (meth)acrylic acid, maleic acid, fumaric acid, tetrahydrophthalic acid, itaconic acid, citraconic acid, crotonic acid, isocrotonic acid, or endo-cis-bicyclo[2.2.1]hept-5-ene-2,3-dicarboxylic acid (Nadic acid (trademark)); derivatives of the above unsaturated carboxylic acid, such as an unsaturated carboxylic acid anhydride, an unsaturated carboxylic acid halide, an unsaturated carboxylic acid amide, an unsaturated carboxylic acid imide, and an ester compound of an unsaturated carboxylic acid, and the like. More specifically, examples of the derivatives of the unsaturated carboxylic acid include maleic anhydride, citraconic anhydride, malenyl chloride, maleimide, monomethyl maleate, dimethyl maleate, glycidyl maleate, and the like.

Among the above modifiers, an α, β-unsaturated dicarboxylic acid and an α,β-unsaturated dicarboxylic acid anhydride such as maleic acid, Nadic acid, and anhydrides of these acids are preferably used. One kind of each of these modifiers may be used alone, or two or more kinds of these modifiers may be used in combination.

It is desirable that a modification rate in the graft-modified substance [B-4] is equal to or lower than 10 mol% in general.

In order to obtain the graft-modified substance [B-4] by using the ethylene-cyclic olefin random copolymer [B-1], the ring-opened (co)polymer [B-2] of the cyclic olefin or the hydride [B-3] of the ring-opened (co)polymer, and the modifier, various polymer modification methods known in the related art can be used. For example, by a method of adding a modifier to the cyclic olefin random copolymer [B-1], the ring-opened (co)polymer [A-2] of the cyclic olefin, or the hydride [B-3] of the ring-opened (co)polymer that is in molten state and causing graft polymerization (reaction) ; a method of adding a modifier in a solution of the cyclic olefin random copolymer [A-1], the ring-opened (co)polymer [B-2] of the cyclic olefin, or the hydride [B-3] of the ring-opened (co)polymer and causing a graft reaction, or the like, the graft-modified substance [B-4] can be obtained. The graft reaction is performed at a temperature of 60°C to 350°C for example. Furthermore, the graft reaction can be performed in the presence of a radical initiator such as an organic peroxide or an azo compound additionally used.

The graft-modified substance [B-4] having the modification rate described above can be directly obtained through the graft reaction among the ethylene-cyclic olefin random copolymer [B-1], the ring-opened (co)polymer [B-2] of the cyclic olefin, or the hydride of [B-3] of the ring-opened (co)polymer, which is unmodified, and a modifier. Furthermore, the graft-modified substance [B-4] can also be obtained by preparing a modified substance having a high modification rate in advance through a graft reaction between the ethylene-cyclic olefin random copolymer [B-1], the ring-opened (co)polymer [B-2] of the cyclic olefin, or hydride of [B-3] of the ring-opened (co)polymer, and a modifier, and then diluting the modified substance with the ethylene-cyclic olefin random copolymer [B-1], the ring-opened (co)polymer [B-2] of the cyclic olefin, or the hydride of [B-3] of the ring-opened (co)polymer, which are unmodified, so as to obtain the desired modification rate.

In the present embodiment, as the resin (B), any of the ethylene-cyclic olefin random copolymer [B-1], the ring-opened (co)polymer [B-2] of the cyclic olefin, the hydride of [B-3] of the ring-opened (co)polymer, and the graft-modified substance [B-4] may be used alone, two or more kinds of the same resins [B-1], [B-2], [B-3], or [B-4] may be used, or these resins may be used in combination. Among these, as the resin (B), the ethylene-cyclic olefin random copolymer [B-1] is preferable.

A degree of crystallinity of the resin (B) measured by X-ray diffractometry is, for example, 0% to 20%, and preferably 0% to 2%.

From the viewpoint of further improving heat resistance and moist-heat resistance while maintaining excellent transparency and impact resistance of the obtained molded product, the softening point temperature (TMA) of the resin (B) is 120°C to 200°C, preferably 130°C to 190°C, and even more preferably 140°C to 180°C.

The softening point temperature (TMA) can be measured based on the description in International Patent Publication No. 2018/047944. More specifically, TMA can be measured based on the description in paragraph "0118" in International Patent Publication No. 2018/047944.

The intrinsic viscosity [$\eta$] (in decalin at 135°C) of the resin (B) is, for example, 0.05 to 5.0 dl/g, preferably 0.2 to 4.0 dl/g, even more preferably 0.3 to 2.0 dl/g, and particularly preferably 0.4 to 2.0 dl/g.

<Molded product>

The molded product according to the present embodiment is obtained by molding the aforementioned resin composition by a known molding method. For example, the molded product is obtained by known thermoforming methods such as extrusion molding, injection molding, inflation molding, blow molding, extrusion blow molding, injection blow molding, press molding, vacuum molding, powder slush molding, calender molding, and expansion molding.

The use of the obtained molded product is not particularly limited, and examples thereof include medical containers as described above.

Examples of the medical containers include a syringe used in a glass syringe or the like filled with a drug solution or a medicine (hereinafter, described as prefilled syringe as well), a storage container used as a storage container filled with a drug solution or a medicine (hereinafter, described as drug solution storage container as well), and the like.

The prefilled syringe is a syringe-shaped preparation filled with a drug solution or a medicine in advance, and is classified into a single chamber type filled with one kind of liquid and a double chamber type filled with two kinds of medicines. Most of the prefilled syringe is a single chamber type. The double chamber type includes a liquid-powder type preparation constituted with powder and a liquid for dissolving the powder and a liquid-liquid type preparation constituted with two kinds of liquids. Examples of the solution contained in the single chamber type include a heparin solution and the like.

Examples of the drug solution·medicine storage container include a medicine bottle, a vial, an infusion bottle, a bulk container, a petri dish, a test tube, an analysis cell, and the like.

The medical container may be subjected to known sterilization treatments such as autoclave sterilization, radiation sterilization, EOG sterilization, UV sterilization, microwaves, boiled water, and steam.

It goes without saying that the use of the molded product is not limited to the medical container. For example, the molded product can also be used as an optical substrate. Specifically, the molded product can be suitably used as a substrate for various display elements, and is useful as an optical substrate for a liquid crystal display element, organic electro ·luminescence (EL), a plasma display panel, electronic paper, and the like. Furthermore, the molded product can be used as a substrate of microcapsule-type or thin film organic EL-type electronic paper.

The present invention is not limited to the above embodiments, and includes modification, amelioration, and the like as long as the object of the present invention can be achieved.

Examples

Hereinafter, the present invention will be specifically described with reference to examples, but the present invention is not limited to the examples. Hereinafter, tetracyclo[4.4.0.$1^{2,5}$.$1^{7,10}$]-3-dodecene will be abbreviated to "TD", and bicyclo[2.2.1]hept-2-ene will be abbreviated to "NB".

Before a synthesis example of the resin (A), various measurement·evaluation methods will be described.

[Intrinsic viscosity]

The intrinsic viscosity [$\eta$] was measured in decalin at 135°C.

Specifically, a polymer sample (about 20 mg) was dissolved in a decalin solvent (15 mL), and a specific viscosity $\eta_{sp}$ thereof was measured in an oil bath at 135°C. A decalin solvent (5 mL) was added to the decalin solution for dilution, and then a specific viscosity $\eta_{sp}$ thereof was measured by the same method as described above. The dilution operation was further repeated twice, and a value of $\eta_{sp}$/C obtained in a case where a concentration (C) of the sample was extrapolated to 0 was adopted as the intrinsic viscosity [$\eta$] of the olefin polymer.

$$\text{Intrinsic viscosity } [\eta] = \lim(\eta_{sp}/C) \quad (C \rightarrow 0)$$

[Molecular weight measurement]

The molecular weight and the molecular weight distribution of a polymer sample were measured using a gel permeation chromatograph (HLC-8321 GPC/HT model manufactured by Tosoh Corporation) prepared by connecting two TSKgel $GMH_6$-HT columns and two TSKgel $GMH_6$-HTL columns (size of each column: diameter of 7.5 mm and length of 300 mm) manufactured by Tosoh Corporation in series as columns. By using o-dichlorobenzene as a mobile phase medium and 0.025% by mass of BHT (manufactured by Wako Pure Chemical Industries, Ltd.) as an antioxidant, the measurement was performed at a sample concentration of 0.15% (W/V), a flow rate of 1.0 ml/min, and 140°C. As standard polystyrenes, polymers having a molecular weights of 590 to 20,600,000 and manufactured by Tosoh Corporation were used. The obtained chromatogram was analyzed by a known method by using data processing software Empower 3 manufactured by WATERS and a calibration curve obtained using the standard polystyrene sample. In this way, a number-average molecular weight Mn, a weight-average molecular weight Mw, and a dispersity Mw/Mn were calculated.

[Content of each monomer component]

The content of each of the monomer components in the total amount of the resin (A) was measured/quantified by a peak position and a peak intensity (value of integral) of 400MHZ $^{13}C$-NMR (ECX400P manufactured by JEOL Ltd.).

[Glass transition temperature (Tg)]

Tg of the obtained polymer was determined by performing DSC under the following conditions.

Device: DSC6220, manufactured by SII NanoTechnology Inc.

Measurement conditions: in a nitrogen atmosphere, the sample held for 5 minutes at 250°C was rapidly cooled to -20°C and then the sample was heated to 250°C at a heating rate of 10°C/min. Through this process, a DSC curve was obtained.

In the obtained DSC curve, the temperature of a point at which straight lines separated from straight lines extending from base lines by equal distance in the ordinate direction intersected with a curve of a portion where glass transition stepwise changed was adopted as a glass transition temperature.

[Monomer compositional ratio in each segment and content of segments with respect to total amount of resin (A)]

(1) First, for several kinds of binary random copolymers constituted with a TD unit and an ethylene unit, the glass transition temperatures were measured, and a relational expression between a cyclic olefin content obtained by $^{13}$C-NMR and Tg (temperature of glass transition temperature) obtained by differential scanning calorimetry (DSC) was determined.

(2) For each of the polymers obtained in examples, $^{13}$C-NMR described above was performed, thereby determining the content (mol%) of the TD-derived unit based on the total amount of the polymer.

(3) Then, DSC described above was performed, thereby obtaining the value of the glass transition temperature (two points) of the respective segments. The obtained value was put in the relational expression described above, thereby calculating the content of the TD-derived unit in each of the segments.

(4) Provided that the content of the TD-derived unit in the first segment is $TD_1$ (mol%), the content of the TD-derived unit in the second segment is $TD_2$ (mol%), the content of the TD-derived unit based on the total amount of the polymer is $TD_{all}$ (mol%), and the content of the second segment with respect to the total amount of the resin (A) is x% by mass, the following equation is set up.

$$\frac{TD_1}{100} \times \frac{(100-x)}{100} + \frac{TD_2}{100} \times \frac{x}{100} = \frac{TD_{all}}{100}$$

The above equation was solved for x, thereby calculating the content of the second segment with respect to the total amount of the resin (A) .

[High-velocity face impact test (high rate test)]

The polymer compound obtained in Example 1 was interposed between UPILEX (trade name, manufactured by UBE INDUSTRIES, LTD.) films, and by using a 2.0 mm spacer, vacuum press molding was performed thereon under the conditions of 240°C, 5 MPa, and 3 minutes. The polymer compound obtained in Example 2 was subjected to vacuum press molding under the conditions of 250°C, 5 MPa, and 3 minutes. In this way, press sheets having a thickness of 2 mm were obtained. Each of the polymer compounds obtained in Comparative Examples 1 and 2 was interposed between UPILEX (trade name, manufactured by UBE INDUSTRIES, LTD.) films, and by using a 2.0 mm spacer, vacuum press molding was performed thereon under the conditions of 240°C, 5 MPa, and 3 minutes.

Under the condition of 23°C, a punch (striker) with a load cell having a diameter of 1/2 inches was caused to collide with each of the press sheets at a test speed of 5 m/s. The back surface of the press sheet was supported by a support having a diameter of 1 inch. From the obtained displacement-testing force displacement curve, the level of energy required until the testing force reached the maximum point was calculated as a maximum impact point energy. The higher the level, the higher the impact resistance.

[Haze (%)]

A press sheet having a thickness of 2 mm prepared in the same manner as described above was used as a test piece, and haze thereof was measured using a digital haze meter (NDH-20D) MANUFACTURED BY NIPPON DENSHOKU INDUSTRIES Co., LTD.

[Test for moist resistance / heat resistance (pressure cooker test (PCT test)]

A press sheet having a thickness of 2 mm prepared in the same manner as described above was used as a test piece. The test piece was installed in an unsaturated highly accelerated temperature and humidity stress tester (PC422R7 manufactured by HIRAYAMA Manufacturing Corporation), and kept as it was for 30 minutes under the conditions of 121°C and a relative humidity of 100% (PCT test) . Then, the test piece was taken out of the unsaturated highly accelerated temperature and humidity stress tester.

The haze of the test piece taken out was measured by the same method as that used for measuring the haze before the test, and the value of displacement was denoted as "Δhaze". The smaller the value of Δhaze, the better the moist-heat resistance.

Hereinafter, the synthesis of polymers will be described.

[Reference synthesis example]

A reactor made of glass having an inner volume of 2 L sufficiently purged by nitrogen was filled with 1,380 ml of toluene and then with 2.5 g of TD, and a liquid phase and a gas phase in the reactor was saturated with ethylene gas at a flow rate of 50 L/h. Thereafter, methylaluminoxane in an amount of 5.0 mmol expressed in terms of aluminum atoms and then 0.002 mmol of a titanium compound represented by the following structure formula were added thereto such that polymerization was initiated. After the polymerization was performed for 1 minute under normal pressure at 25°C in the ethylene gas atmosphere described above, the polymerization was stopped by adding a small amount of isobutyl alcohol. After the finish of the polymerization, the reactant was put into a 1.5 L acetone/methanol (volume ratio: 3/1) mixed solvent supplemented with 2 ml of concentrated hydrochloric acid such that a polymer was fully precipitated, and the resulting solution was stirred and then filtered through filter paper. The precipitated polymer was washed with acetone/methanol (volume ratio: 3/1) and then dried under reduced pressure for 10 hours at 130°C. The obtained ethylene/TD copolymer weighed 1.685 g, and the polymerization activity thereof per 1 mmol of titanium was 5.06 kg/hr. The ratio of the TD-derived structure in the polymer determined by $^{13}C$-NMR was 12 mol%, and an intrinsic viscosity [η] of the polymer was 1.22 dl/g.

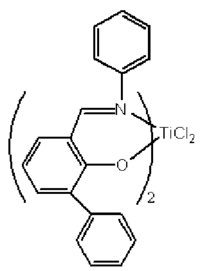

[Synthesis Example 1]

In the reference synthesis example described above, ethylene/TD were reacted for 1 minute at 25°C, and the reactor was then filled with 15.1 g of TD. Polymerization was then performed for 4 minutes under normal pressure at 25°C in the ethylene gas atmosphere, and then the polymerization was stopped by adding a small amount of isobutyl alcohol. After the finish of the polymerization, the reactant was put into a 1.5 L acetone/methanol (volume ratio: 3/1) mixed solvent supplemented with 2 ml of concentrated hydrochloric acid such that a polymer was fully precipitated, and the resulting solution was stirred and then filtered through filter paper. The precipitated polymer was washed with acetone/methanol (volume ratio: 3/1) and then dried under reduced pressure for 10 hours at 130°C. The obtained ethylene/TD block copolymer weighed 4.54 g, and the polymerization activity thereof per 1 mmol of titanium was 2.72 kg/hr.

By the measurement method described above, the TD content with respect to the total amount of the polymer was found to be 21.4 mol%, the amount of the second segment (segment rich in ethylene-derived structural units) with respect to the total amount of the polymer was found to be 54% by weight, the TD content and the ethylene content in the first segment were found to be 33 mol% and 67 mol% respectively, and the TD content and the ethylene content in the second segment were found to be 12 mol% and 88 mol% respectively.

Furthermore, the polymer had an intrinsic viscosity [η] of 1.26 dl/g, a weight-average molecular weight (Mw) of 275,000, a number-average molecular weight (Mn) of 219,000 (both of Mw and Mn were expressed in terms of polystyrene), and a dispersity (Mw/Mn) of 1.25.

Fig. 1 shows a GPC chart (differential weight distribution curve) of the resin of the reference synthesis example and the resin of Synthesis Example 1. Note that the ordinate shows a common logarithm (Log) of a molecular weight M.

It is understood that the molecular weight of the resin of Synthesis Example 1 is larger than that of the copolymer obtained in the reference synthesis example, and Mw/Mn of the resin does not significantly change. From this result, it is understood that a block copolymer is obtained in Synthesis Example 1.

[Synthesis Example 2]

In Synthesis Example 1, ethylene/TD was reacted for 1 minute at 25°C, and then 15.1 g of TD was added in the reactor. Polymerization was then performed for 6 minutes under normal pressure at 25°C in the ethylene gas atmosphere, and then the polymerization was stopped by adding a small amount of isobutyl alcohol. After the finish of the polymerization, the reactant was put into a 1.5 L acetone/methanol (volume ratio: 3/1) mixed solvent supplemented with 2 ml of concentrated hydrochloric acid such that a polymer was fully precipitated, and the resulting solution was stirred and then filtered through filter paper. The precipitated polymer was washed with acetone/methanol (volume ratio: 3/1) and then dried under reduced pressure for 10 hours at 130°C. The obtained ethylene/TD block copolymer weighed 6.29 g, and the polymerization activity thereof per 1 mmol of titanium was 2.70 kg/hr.

By the measurement method described above, the TD content with respect to the total amount of the polymer was found to be 23.0 mol%, the amount of the second segment (segment rich in ethylene-derived structural units) with respect to the total amount of the polymer was found to be 44% by weight, the TD content and the ethylene content in the first segment were found to be 33 mol% and 67 mol% respectively, and the TD content and the ethylene content in the second segment were found to be 11 mol% and 89 mol% respectively.

Furthermore, the polymer had an intrinsic viscosity [η] of 1.68 dl/g, a weight-average molecular weight (Mw) of 359,000, a number-average molecular weight (Mn) of 263,000 (both of Mw and Mn were expressed in terms of polystyrene), and a dispersity (Mw/Mn) of 1.37.

[Synthesis Example 3 (comparative)]

A reactor made of glass having an inner volume of 1 L sufficiently purged by nitrogen was filled with 500 ml of toluene and then with 2 ml of a toluene solution (0.5 g/ml) containing NB, and a liquid phase and a gas phase in the reactor were saturated with ethylene gas at a flow rate of 50 L/h. Thereafter, methylaluminoxane in an amount of 7.5 mmol expressed in terms of aluminum atoms and then 0.003 mol of a titanium compound represented by the following structure formula were added thereto such that polymerization was initiated. After the polymerization was performed for 30 seconds under normal pressure at 25°C in the ethylene gas atmosphere described above, 40 ml of a toluene solution (0.5 g/ml) containing NB was added thereto, and polymerization was then performed for 2 minutes and 30 seconds under normal pressure at 25°C in the ethylene gas atmosphere. Thereafter, by adding a small amount of isobutyl alcohol, the polymerization was stopped. After the finish of the polymerization, the reactant was put into a 1.5 L acetone/methanol (volume ratio: 3/1) mixed solvent supplemented with 2 ml of concentrated hydrochloric acid such that a polymer was fully precipitated, and the resulting solution was stirred and then filtered through filter paper. The precipitated polymer was washed with acetone/methanol (volume ratio: 3/1) and then dried under reduced pressure for 10 hours at 130°C.

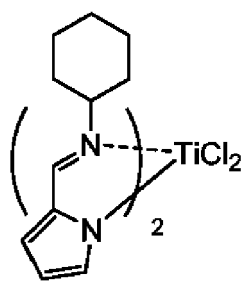

The obtained ethylene/NB block copolymer weighed 1.81 g, and the polymerization activity thereof per 1 mmol of titanium was 1.21 kg/hr.

Furthermore, the copolymer had an intrinsic viscosity [η] of 1.45 dl/g, a weight-average molecular weight (Mw) of 262,000, a number-average molecular weight (Mn) of 143,000 (both of Mw and Mn were expressed in terms of polystyrene), and a dispersity (Mw/Mn) of 1.83.

[Synthesis Example 4 (comparative)]

A reactor made of glass having an inner volume of 2 L sufficiently purged by nitrogen was filled with 120 ml of toluene and then with 29 ml of a toluene solution (0.5 g/ml) containing NB, and a liquid phase and a gas phase in the

reactor were saturated with ethylene at 12 L/h and nitrogen gas at a flow rate of 36 L/h. Thereafter, methylaluminoxane in an amount of 7.5 mmol expressed in terms of aluminum atoms was added thereto. In addition, 0.050 mmol of rac-dimethylsilylbis(1-indenyl) zirconium dichloride was dissolved in methylaluminoxane in an amount of 7.5 mmol expressed in terms of aluminum atoms, and the solution was stirred for 15 minutes, thereby preliminarily activating the solution. The metallocene/methylaluminoxane solution was added to the reactor such that polymerization was initiated. After the polymerization was performed for 30 minutes under normal pressure at 20°C in the ethylene gas atmosphere described above, 1,460 ml of a toluene was added thereto, and polymerization was then performed for 2 minutes under normal pressure at 25°C in the ethylene gas atmosphere at a flow rate of 100 L/h. Thereafter, by adding a small amount of isobutyl alcohol, the polymerization was stopped. After the finish of the polymerization, the reactant was put into a 1.5 L acetone/methanol (volume ratio: 3/1) mixed solvent supplemented with 2 ml of concentrated hydrochloric acid such that a polymer was fully precipitated, and the resulting solution was stirred and then filtered through filter paper. The precipitated polymer was washed with acetone/methanol (volume ratio: 3/1) and then dried under reduced pressure for 10 hours at 130°C.

The obtained ethylene/NB copolymer weighed 1.52 g, and the polymerization activity thereof per 1 mmol of zirconium was 0.06 kg/hr.

Furthermore, the copolymer had an intrinsic viscosity [$\eta$] of 0.35 dl/g, a weight-average molecular weight (Mw) of 56,000, a number-average molecular weight (Mn) of 28,300 (both of Mw and Mn were expressed in terms of polystyrene), and a dispersity (Mw/Mn) of 1.98.

[Evaluation results]

By the method described above, the glass transition temperature of each of the polymers obtained in Synthesis Examples 1 and 2, the polymers (shown below) of Comparative Examples 1 and 2, and the polymers obtained in Synthesis Examples 3 and 4 was measured. Furthermore, by the methods described above, the high-speed surface impact test, the haze evaluation test, and the PCT test were performed. The results are shown in the following Table. From Example 1, evaluation results based on the polymer obtained in Synthesis Example 1 were obtained. From Example 2, evaluation results based on the polymer obtained in Synthesis Example 2 were obtained.

- ·Comparative Example 1: APEL 6015T manufactured by Mitsui Chemicals, Inc. (copolymer of $\alpha$-olefin and cyclic olefin, having only one glass transition temperature at 145°C)
- ·Comparative Example 2: ZEONEX (registered trademark) 690R manufactured by ZEON CORPORATION (copolymer of $\alpha$-olefin and cyclic olefin, having only one glass transition temperature at 136°C)

[Table 1]

| | Example 1 | Example 2 | Comparative Example 1 | Comparative Example 2 | Comparative Example 3 | Comparative Example 4 |
|---|---|---|---|---|---|---|
| Polymer | Synthesis Example 1 | Synthesis Example 2 | APEL 6015T | ZEONEX 690R | Synthesis Example 3 | Synthesis Example 4 |
| Glass transition temperature 1 | 12 °C | 10°C | - | - | 10°C | - |
| Glass transition temperature 2 | 136°C | 129°C | 145°C | 136°C | 109°C | 109°C |
| Mw/Mn | 1.25 | 1.37 | No data | No data | 1.83 | 1.98 |
| High-speed surface impact energy [J] | 25 | 24 | 0.4 | 4 | 24 | No data |
| Haze (%) | 1.8 | 2.0 | 2.4 | 1.5 | 12.6 | 8.0 |
| ΔHaze (%) (PCT test) | 0.2 | 0.2 | 3.8 | 1.3 | 9.8 | 4.0 |

As shown in the above table, each of the molded products (Examples 1 and 2) prepared using the resin

composition containing the resin (A) had low haze and was extremely excellent in terms of the high-speed surface impact energy. That is, the molded products improved impact resistance while maintaining transparency. Furthermore, the molded products of Examples 1 and 2 had small Δhaze in the PCT test. That is, the molded products had excellent moist-heat resistance.

Presumably, because the glass transition temperature on a high temperature side of the polymers obtained in Synthesis Example 1 and Synthesis Example 2 is in a region equal to or higher than 125°C, heat resistance and moist-heat resistance of the polymers may be excellent; because the polymers have a glass transition temperature in a low-temperature region equal to or lower than 50°C, impact strength thereof may be excellent; because the dispersity of the polymers is 1.0 to 1.6, homogeneity -transparency and the like of the molded product may be excellent; and accordingly, the excellent results described above may be obtained.

In contrast, regarding the evaluation of high-speed surface impact energy, that is, regarding the evaluation of impact resistance, the molded products of Comparative Examples 1 and 2, in which the glass transition temperature is not in the low-temperature region equal to or lower than 50°C, were poorer than Examples 1 and 2.

Furthermore, the compositions of Comparative Examples 3 and 4, in which the polymers of Synthesis Example 3 and Synthesis Example 4 that are polymers not having a glass transition temperature in a region equal to or higher than 125°C are used, have large Δhaze, that is, poor moist-heat resistance. In addition, it is understood that because the polymer of Synthesis Example 3 has two glass transition temperature but has high Mw/Mn, Comparative Example 3 has high haze, that is, poor transparency.

<Additional examples (using resins in combination)>

A test piece was prepared, using the polymer obtained in Synthesis Example 1 and the polymer A-1 (copolymer of ethylene and TD, softening point (TMA): 155°C) described in Table 1 in International Patent Publication No. 2018/047944 at a mass ratio of 1:1, the high-speed surface impact test, haze, the PCT test, and the like were performed. As a result, it has been confirmed that the impact resistance, transparency, and heat resistance thereof were suited for the obtained polymer to be usable in medical containers.

In addition, a test piece was prepared, using the polymer obtained in Synthesis Example 2 and the polymer A-2 (copolymer of ethylene and TD, softening point (TMA): 175°C) described in Table 1 in International Patent Publication No. 2018/047944 at a mass ratio of 1:1, the high-speed surface impact test, haze, the PCT test, and the like were performed. As a result, it has been confirmed that the impact resistance, transparency, and heat resistance thereof were suited for the obtained polymer to be usable in medical containers.

The present application claims priority based on Japanese Patent Application No. 2017-067093 filed on March 30, 2017.

## Claims

**1.** A resin (A) comprising:

a structural unit (a1) derived from an α-olefin; and
a structural unit (a2) derived from a cyclic olefin,
wherein the resin (A) has a glass transition temperature, as determined by JIS K 7121, in both a region equal to or lower than 50°C and a region equal to or higher than 125°C in a case where the resin (A) is subjected to differential scanning calorimetry, and
wherein the resin (A) has a dispersity (Mw/Mn) within a range of 1.0 to 1.6 measured by gel permeation chromatography as described in the section "*[Molecular weight measurement]*" of the specification; and
wherein the resin (A) has a weight-average molecular weight within a range of 10,000 to 500,000 measured by gel permeation chromatography as described in the section "*[Molecular weight measurement]*" of the specification.

**2.** The resin (A) according to claim 1,
wherein the resin (A) has a glass transition temperature in both a range equal to or lower than 30°C and a range equal to or higher than 125°C.

**3.** The resin (A) according to claim 1 or 2, further comprising:

a first segment; and
a second segment

wherein the resin (A) has a first segment and a second segment which differ from each other in content ratios of the structural unit (a1) and the structural unit (a2),
the first segment contains the structural unit (a1) at 0 to 80 mol% and the structural unit (a2) at 20 to 100 mol%,
the second segment contains the structural unit (a1) at 40 to 100 mol% and the structural unit (a2) at 0 to 60 mol%, and
a molar ratio of the structural unit (a1) in the second segment is higher than a molar ratio of the structural unit (a1) in the first segment.

**4.** The resin (A) according to claim 3,
wherein a content of the second segment is 1% to 80% by mass with respect to a total amount of the resin.

**5.** The resin (A) according to any one of claims 1 to 4,
wherein the resin (A) has an intrinsic viscosity [$\eta$] of 0.05 to 10 dl/g in decalin at 135°C, as determined according to the method described in the section "*[Intrinsic viscosity]*" of the specification.

**6.** A cyclic olefin-based resin composition for molding, comprising:
the resin (A) according to any one of claims 1 to 5.

**7.** The cyclic olefin-based resin composition for molding according to claim 6, further comprising:

a resin (B) which corresponds to any of [B-1], [B-2], [B-3], and [B-4] and has a softening point temperature of 120°C to 200°C measured by a thermal mechanical analyzer,
wherein provided that a total amount of the resin (A) and the resin (B) is 100 parts by mass, an amount of the resin (A) is 5 to 95 parts by mass,

[B-1] a random copolymer of ethylene and a cyclic olefin represented by General Formula (1') or (2')

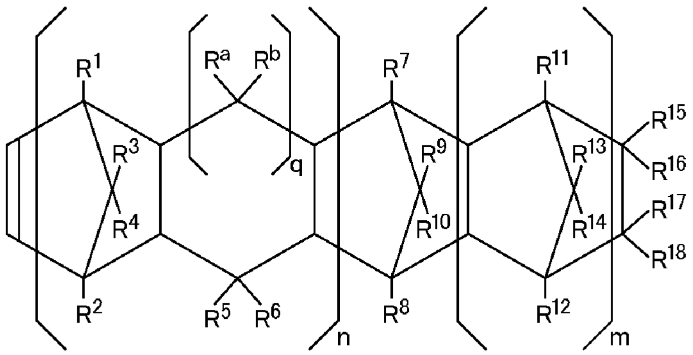

(1')

in General Formula (1'),

n represents 0 or 1,
m represents 0 or a positive integer,
q represents 0 or 1,
$R^1$ to $R^{18}$, $R^a$, and $R^b$ each independently represent a hydrogen atom, a halogen atom, or a hydrocarbon group which may be substituted with halogen, $R^{15}$ to $R^{18}$ may form a monocyclic ring or a polycyclic ring by being bonded to each other, the monocyclic ring or the polycyclic ring may have a double bond, and $R^{15}$ and $R^{16}$ or $R^{17}$ and $R^{18}$ may form an alkylidene group,

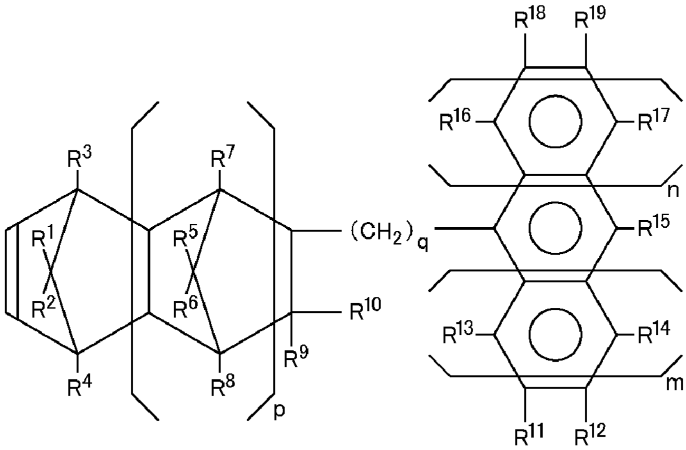

(2')

in General Formula (2'),

p and q each independently represent 0 or a positive integer,
m and n each independently represent 0, 1, or 2,
$R^1$ to $R^{19}$ each independently represent a hydrogen atom, a halogen atom, or a hydrocarbon group or alkoxy group which may be substituted with a halogen atom, a carbon atom, to which $R^9$ and $R^{10}$ are bonded, may be bonded to a carbon atom, to which $R^{13}$ is bonded, or to a carbon atom, to which $R^{11}$ is bonded, directly or through an alkylene group having 1 to 3 carbon atoms, and provided that n = m = 0, $R^{15}$ and $R^{12}$ or $R^{15}$ and $R^{19}$ may form a monocyclic or polycyclic aromatic ring by being bonded to each other,

[B-2] a ring-opened polymer or copolymer of the cyclic olefin represented by General Formula (1') or (2'),
[B-3] a hydride of the ring-opened polymer or the copolymer [B-2], and
[B-4] a graft-modified substance of the [B-1], [B-2], or [B-3].

**8.** A molded product comprising:
the cyclic olefin-based resin composition for molding according to claim 6 or 7.

**9.** The molded product according to claim 8,
wherein the molded product is a medical container.

**10.** The molded product according to claim 8 or 9,
wherein the molded product is a syringe or a drug solution storage container.

**Patentansprüche**

**1.** Harz (A), umfassend:

eine Struktureinheit (a1), die von einem $\alpha$-Olefin abgeleitet ist; und
eine Struktureinheit (a2), die von einem cyclischen Olefin abgeleitet ist,
wobei das Harz (A) eine Glasübergangstemperatur, bestimmt gemäß JIS K 7121, sowohl in einem Bereich von gleich oder niedriger als 50°C als auch in einem Bereich von gleich oder höher als 125°C aufweist, wenn das Harz (A) einer dynamischen Differenzkalorimetrie unterzogen wird, und
wobei das Harz (A) eine Dispersität (Mw/Mn) innerhalb eines Bereichs von 1,0 bis 1,6, gemessen mittels Gelpermeationschromatographie, wie in dem Abschnitt "*[Molekulargewichtsmessung]*" ("*[Molecular weight measurement]*") der Spezifikation beschrieben, aufweist; und
wobei das Harz (A) ein gewichtsgemitteltes Molekulargewicht innerhalb eines Bereichs von 10.000 bis 500.000, gemessen mittels Gelpermeationschromatographie, wie im Abschnitt "*[Molekulargewichtsmessung]*" ("*[Molecular weight measurement]*") der Spezifikation beschrieben, aufweist.

**2.** Harz (A) gemäß Anspruch 1,

wobei das Harz (A) eine Glasübergangstemperatur sowohl in einem Bereich von gleich oder niedriger als 30°C als auch in einem Bereich von gleich oder höher als 125°C aufweist.

**3.** Harz (A) gemäß Anspruch 1 oder 2, ferner umfassend:

ein erstes Segment; und
ein zweites Segment
wobei das Harz (A) ein erstes Segment und ein zweites Segment aufweist, die sich in den Gehaltsverhältnissen der Struktureinheit (a1) und der Struktureinheit (a2) voneinander unterscheiden,
wobei das erste Segment die Struktureinheit (a1) zu 0 bis 80 Mol-% und die Struktureinheit (a2) zu 20 bis 100 Mol-% enthält,
wobei das zweite Segment die Struktureinheit (a1) zu 40 bis 100 Mol-% und die Struktureinheit (a2) zu 0 bis 60 Mol-% enthält, und
wobei ein molares Verhältnis der Struktureinheit (a1) im zweiten Segment höher ist als ein molares Verhältnis der Struktureinheit (a1) im ersten Segment.

**4.** Harz (A) gemäß Anspruch 3,
wobei der Gehalt des zweiten Segments 1 bis 80 Massen-%, bezogen auf die Gesamtmenge des Harzes, beträgt.

**5.** Harz (A) gemäß einem der Ansprüche 1 bis 4,
wobei das Harz (A) eine intrinsische Viskosität [η] von 0,05 bis 10 dl/g in Decalin bei 135°C aufweist, bestimmt gemäß dem im Abschnitt "*[Intrinsische Viskosität]*" ("*[Intrinsic viscosity]*") der Spezifikation beschriebenen Verfahren.

**6.** Harzzusammensetzung auf Basis cyclischer Olefine zum Formen, umfassend:
das Harz (A) gemäß einem der Ansprüche 1 bis 5.

**7.** Harzzusammensetzung auf Basis cyclischer Olefine zum Formen gemäß Anspruch 6, ferner umfassend:

ein Harz (B), das einem von [B-1], [B-2], [B-3] und [B-4] entspricht und eine Erweichungspunkttemperatur von 120°C bis 200°C, gemessen mit einem thermomechanischen Analysator, aufweist,
wobei, vorausgesetzt, dass eine Gesamtmenge des Harzes (A) und des Harzes (B) 100 Massenteile beträgt, eine Menge des Harzes (A) 5 bis 95 Massenteile beträgt,

[B-1] ein statistisches Copolymer aus Ethylen und einem cyclischen Olefin, dargestellt durch die allgemeine Formel (1') oder (2')

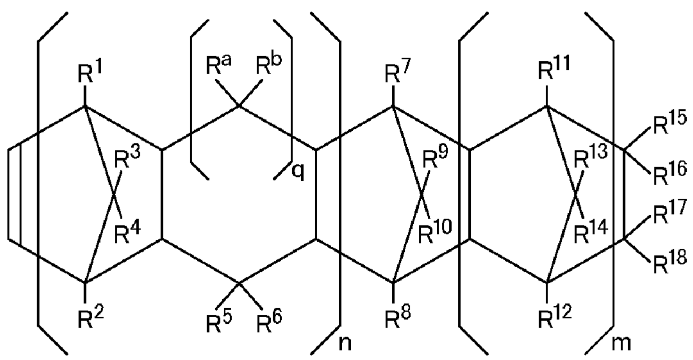

(1')

in der allgemeinen Formel (1'),

stellt n 0 oder 1 dar,
stellt m 0 oder eine positive ganze Zahl dar,
stellt q 0 oder 1 dar,
stellen $R^1$ bis $R^{18}$, $R^a$ und $R^b$ jeweils unabhängig voneinander ein Wasserstoffatom, ein Halogenatom oder eine Kohlenwasserstoffgruppe dar, die mit Halogen substituiert sein kann, können $R^{15}$ bis $R^{18}$ einen monocyclischen Ring oder einen polycyclischen Ring bilden, indem sie aneinander binden, kann der monocyclische Ring oder der polycyclische Ring eine Doppelbindung aufweisen, und können $R^{15}$

und $R^{16}$ oder $R^{17}$ und $R^{18}$ eine Alkylidengruppe bilden,

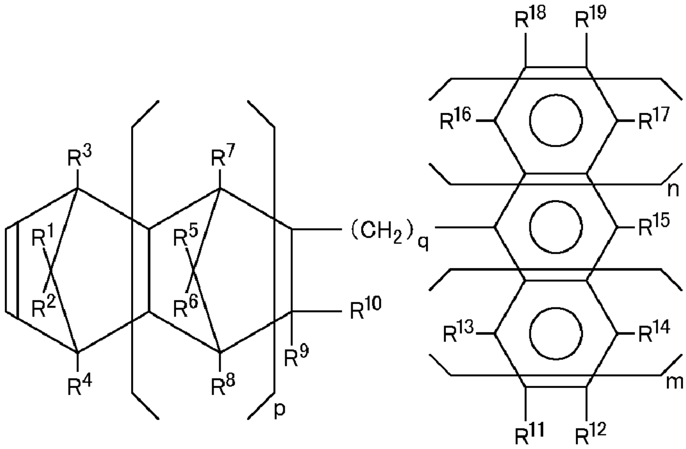

(2')

in der allgemeinen Formel (2'),

stellen p und q jeweils unabhängig voneinander 0 oder eine positive ganze Zahl dar,
stellen m und n jeweils unabhängig voneinander 0, 1 oder 2 dar,
stellen $R^1$ bis $R^{19}$ jeweils unabhängig voneinander ein Wasserstoffatom, ein Halogenatom, eine Kohlenwasserstoffgruppe oder eine Alkoxygruppe, die mit einem Halogenatom substituiert sein können, dar, kann ein Kohlenstoffatom, an das $R^9$ und $R^{10}$ gebunden sind, direkt oder über eine Alkylengruppe mit 1 bis 3 Kohlenstoffatomen an ein Kohlenstoffatom gebunden sein, an das $R^{13}$ gebunden ist, und, vorausgesetzt, dass n = m = 0, können $R^{15}$ und $R^{12}$ oder $R^{15}$ und $R^{19}$ eine monocyclischen oder polycyclischen aromatischen Ring bilden, indem sie aneinander binden,

[B-2] ein Ringöffnungspolymer oder -copolymer des cyclischen Olefins, dargestellt durch die allgemeine Formel (1') oder (2'),
[B-3] ein Hydrid des Ringöffnungspolymers oder - copolymers [B-2], und
[B-4] eine pfropf-modifizierte Substanz von [B-1], [B-2] oder [B-3].

**8.** Formkörper, umfassend:
die Harzzusammensetzung auf Basis cyclischer Olefine zum Formen gemäß Anspruch 6 oder 7.

**9.** Formkörper gemäß Anspruch 8,
wobei der Formkörper ein medizinischer Behälter ist.

**10.** Formkörper gemäß Anspruch 8 oder 9,
wobei der Formkörper eine Spritze oder ein Behälter zur Aufbewahrung von Arzneimittellösungen ist.

## Revendications

**1.** Résine (A) comprenant :

une unité structurale (a1) dérivée d'une a-oléfine ; et
une unité structurale (a2) dérivée d'une oléfine cyclique,
dans laquelle la résine (A) présente une température de transition vitreuse, telle que déterminée par JIS K 7121, à la fois dans une région égale ou inférieure à 50 °C et dans une région égale ou supérieure à 125 °C dans un cas où la résine (A) est soumise à une calorimétrie à balayage différentiel, et
dans laquelle la résine (A) présente une dispersité (Mw/Mn) dans une plage de 1,0 à 1,6 mesurée par chromatographie par perméation de gel comme décrit dans la section "*[Molecular weight measurement]*" ("*[Mesure de poids moléculaire]*") de la spécification ; et
dans laquelle la résine (A) présente un poids moléculaire moyen en poids dans une plage de 10000 à 500000 mesuré par chromatographie par perméation de gel comme décrit dans la section *"[Molecular weight measu-*

*rement]" ("[Mesure de poids moléculaire]")* de la spécification.

**2.** Résine (A) selon la revendication 1,
dans laquelle la résine (A) présente une température de transition vitreuse à la fois dans une plage égale ou inférieure à 30 °C et dans une plage égale ou supérieure à 125 °C.

**3.** Résine (A) selon la revendication 1 ou la revendication 2, comprenant en outre :

un premier segment ; et
un second segment
dans laquelle la résine (A) présente un premier segment et un second segment qui diffèrent l'un de l'autre en termes de rapports de teneurs de l'unité structurale (a1) et de l'unité structurale (a2),
le premier segment contient l'unité structurale (a1) à 0 à 80 % en mole et l'unité structurale (a2) à 20 à 100 % en mole,
le second segment contient l'unité structurale (a1) à 40 à 100 % en mole et l'unité structurale (a2) à 0 à 60 % en mole, et
un rapport molaire de l'unité structurale (a1) dans le second segment est supérieur à un rapport molaire de l'unité structurale (a1) dans le premier segment.

**4.** Résine (A) selon la revendication 3,
dans laquelle une teneur du second segment est de 1 % à 80 % en masse par rapport à une quantité totale de la résine.

**5.** Résine (A) selon l'une quelconque des revendications 1 à 4,
dans laquelle la résine (A) présente une viscosité intrinsèque [η] de 0,05 à 10 dl/g dans la décaline à 135 °C, telle que déterminée selon le procédé décrit dans la section *"[Intrinsic viscosity]" ("[Viscosité intrinsèque]"*) de la spécification.

**6.** Composition de résine à base d'oléfine cyclique pour moulage, comprenant :
la résine (A) selon l'une quelconque des revendications 1 à 5.

**7.** Composition de résine à base d'oléfine cyclique pour moulage selon la revendication 6, comprenant en outre :

une résine (B) qui correspond à l'un quelconque parmi [B-1], [B-2], [B-3] et [B-4] et présente une température de point de ramollissement de 120 °C à 200 °C mesurée par un analyseur mécanique thermique,
dans laquelle à condition qu'une quantité totale de la résine (A) et de la résine (B) soit de 100 parties en masse, une quantité de la résine (A) est de 5 à 95 parties en masse,

[B-1] un copolymère aléatoire d'éthylène et d'une oléfine cyclique représenté par la Formule Générale (1') ou (2')

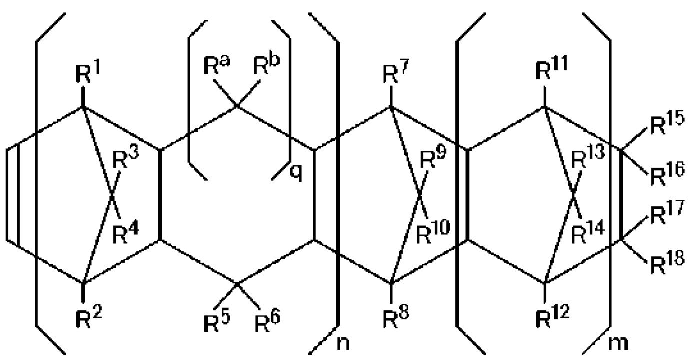

(1')

dans la Formule Générale (1'),

n représente 0 ou 1,
m représente 0 ou un nombre entier positif,
q représente 0 ou 1,

$R^1$ à $R^{18}$, $R^a$ et $R^b$ représentent chacun indépendamment un atome d'hydrogène, un atome d'halogène ou un groupe hydrocarbures qui peut être substitué par un halogène, $R^{15}$ à $R^{18}$ peuvent former une chaîne monocyclique ou une chaîne polycyclique en étant liés les uns aux autres, la chaîne monocyclique ou la chaîne polycyclique peut présenter une double liaison, et $R^{15}$ et $R^{16}$ ou $R^{17}$ et $R^{18}$ peuvent former un groupe alkylidène,

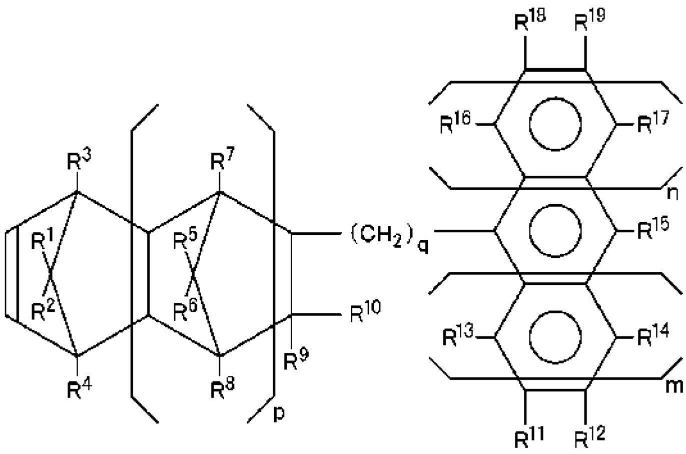

(2')

dans la Formule Générale (2'),

p et q représentent chacun indépendamment 0 ou un nombre entier positif,
m et n représentent chacun indépendamment 0, 1 ou 2,
$R^1$ à $R^{19}$ représentent chacun indépendamment un atome d'hydrogène, un atome d'halogène ou un groupe hydrocarbures ou groupe alcoxy qui peut être substitué par un atome d'halogène, un atome de carbone, auquel $R^9$ et $R^{10}$ sont liés, peut être lié à un atome de carbone, auquel $R^{13}$ est lié, ou à un atome de carbone, auquel $R^{11}$ est lié, directement ou par le biais d'un groupe alkylène présentant de 1 à 3 atomes de carbone, et à condition que n = m = 0, $R^{15}$ et $R^{12}$ ou $R^{15}$ et $R^{19}$ peuvent former une chaîne aromatique monocyclique ou polycyclique en étant liés les uns aux autres,

[B-2] un polymère ou copolymère à chaîne ouverte de l'oléfine cyclique représenté par la Formule Générale (1') ou (2'),
[B-3] un hydrure du polymère à chaîne ouverte ou du copolymère [B-2], et
[B-4] une substance modifiée par greffe du [B-1], [B-2] ou [B-3].

**8.** Produit moulé comprenant :
la composition de résine à base d'oléfine cyclique pour moulage selon la revendication 6 ou la revendication 7.

**9.** Produit moulé selon la revendication 8,
dans lequel le produit moulé est un contenant médical.

**10.** Produit moulé selon la revendication 8 ou la revendication 9,
dans lequel le produit moulé est une seringue ou un contenant de stockage de solution médicamenteuse.

[Fig. 1]

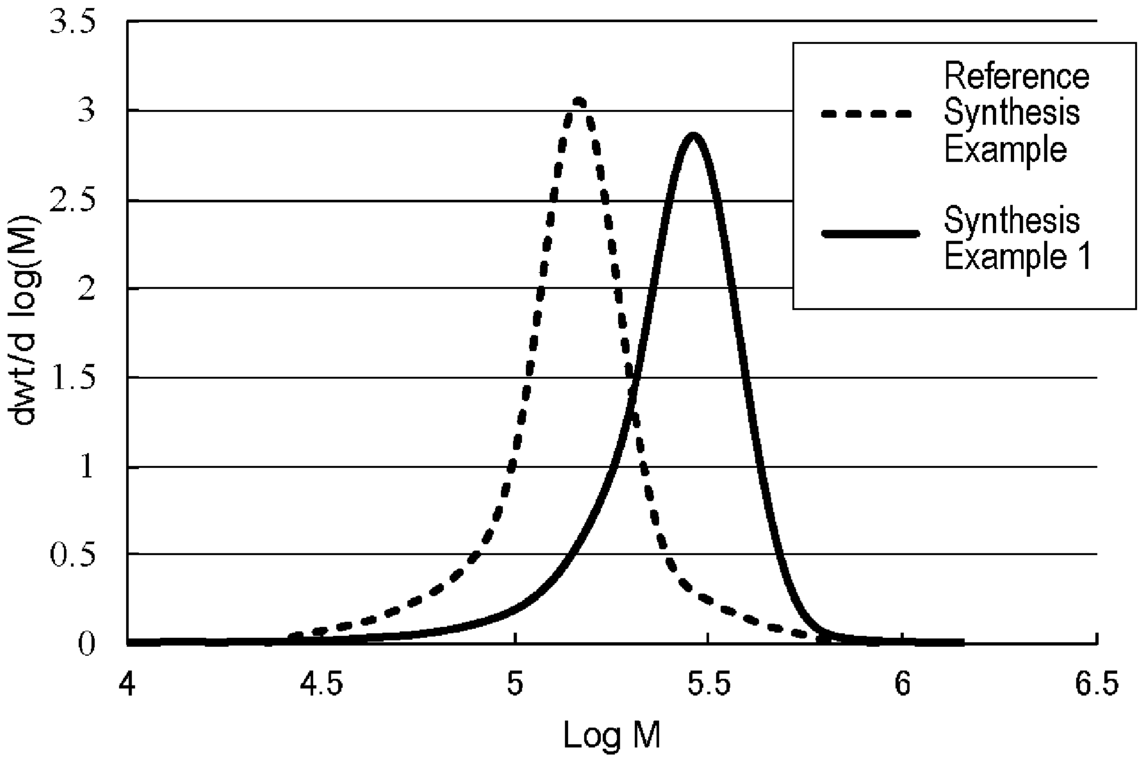
3.5
3
2.5
2
1.5
1
0.5
0
dwt/d log(M)
4
4.5
5
5.5
6
6.5
Log M
Reference Synthesis Example
Synthesis Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5320268 A
- JP 2009051922 A
- JP 5339327 A
- JP 6041361 A
- JP 2004359798 A
- JP 7145213 A
- JP 60168708 A
- JP 61120816 A
- JP 61115912 A
- JP 61115916 A
- JP 61271308 A
- JP 61272216 A
- JP 62252406 A
- JP 62252407 A
- JP 2008068897 A
- JP 61221206 A
- JP 64000106 A
- JP 2173112 A
- JP 2001072706 A
- JP 2002332312 A
- JP 2003313247 A
- JP 2004107486 A
- JP 2004107563 A
- JP 7324108 A
- WO 2018047944 A
- JP 2017067093 A